# FASCICULE DE BREVET EUROPEEN

(11) **EP 2 416 967 B1**
(45) Date de publication et mention de la délivrance du brevet: **14.08.2013**
(21) Numéro de dépôt: 10716111.9
(22) Date de dépôt: 12.04.2010
(51) Int. Cl.: B41M 3/10, B42D 15/04

(54) **DOCUMENTS A VOLETS COMPORTANT UNE STRUCTURE MUNIE D'UN FILIGRANE OU PSEUDO-FILIGRANE ET PROCEDE ASSOCIE**
IN ABSCHNITTE UNTERTEILTE DOKUMENTE MIT EINER MIT EINEM WASSERZEICHEN ODER PSEUDO-WASSERZEICHEN VERSEHENEN STRUKTUR UND ZUGEHÖRIGE VERFAHREN
SECTIONAL DOCUMENTS COMPRISING A STRUCTURE EQUIPPED WITH A WATERMARK OR PSEUDO-WATERMARK AND ASSOCIATED PROCESS

(30) Priorité: 10.04.2009 FR 0952417
(43) Date de publication de la demande: 15.02.2012
(73) Titulaire: ARJOWIGGINS SECURITY, 92100 Boulogne Billancourt (FR)
(72) Inventeur: RANCIEN, Sandrine, F-38140 La Murette (FR); LE LOARER, Thibault, F-38260 Pommier De Beaurepaire (FR); MARLIN, Pascal, F-77120 Coulommiers (FR)
(74) Mandataire: Tanty, François
(86) Numéro de dépôt international: PCT/IB2010/051555
(87) Numéro de publication internationale: WO 2010/116343

(56) Documents cités:
- WO-A1-2007/034129
- DE-C1- 3 909 351

## Description

La présente invention se rapporte au domaine des documents de sécurité. Elle concerne un document à volets comportant une structure munie d'un filigrane ou pseudo-filigrane, et le procédé de fabrication d'un tel document.

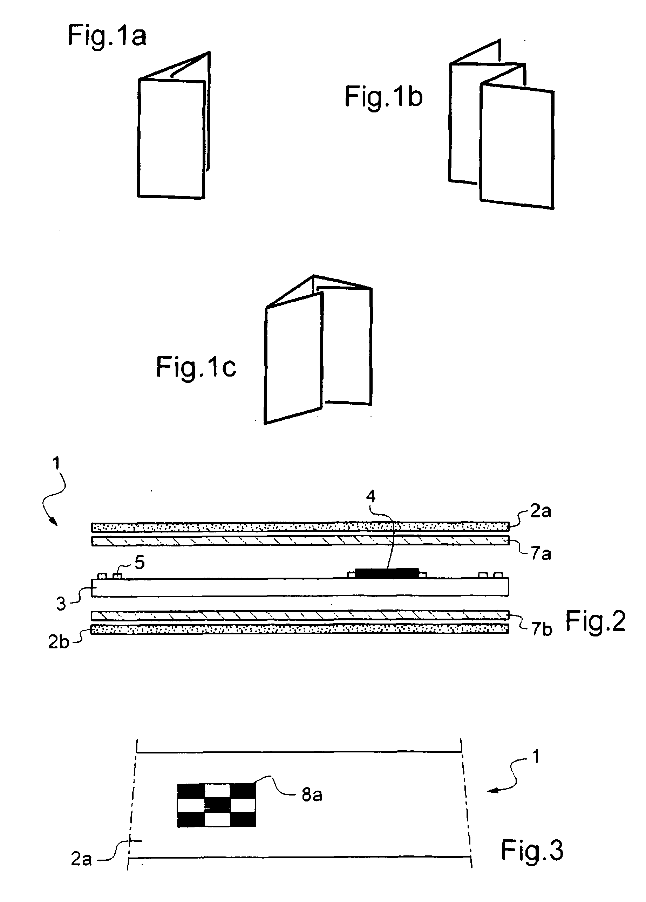

Par « document à volets », on entend un document présentant ou non une fonction d'identification d'une personne ou d'un objet et qui comporte au moins une zone de pliage, telle qu'un livret de passeport, un document à trois volets pliable en « triptyque », tel que représenté à la figure 1a, comme une carte grise ou un permis de conduire français ou un document pliable en « accordéon », tel que représenté à la figure 1b ou en « portefeuille » à plusieurs volets, tel que représenté à la figure 1c.

### Arrière-plan

Un document à volets, par exemple tel qu'un livret de passeport, comporte généralement une couverture et une ou plusieurs feuilles intérieures, par exemple au moins seize feuilles dans le cas d'un livret de passeport.

Pour permettre de sécuriser de tels documents à volets, notamment contre les tentatives de falsifications et/ou de contrefaçons, ceux-ci comportent le plus souvent au moins une page d'une feuille intérieure qui comporte des données de sécurité, par exemple des données personnelles imprimées ou gravées, et éventuellement une photographie relative au porteur du document à volets. Pour améliorer davantage la sécurisation, ces données peuvent être recouvertes d'un film de protection holographique. En outre, pour permettre l'authentification d'un tel document et rendre plus difficile une tentative de contrefaçon, le document à volets peut encore comporter un ou plusieurs éléments de sécurité bien connus, tel qu'un filigrane ou pseudo-filigrane, un dispositif à microcircuit intégré, entre autres, ces éléments de sécurité pouvant notamment être imprimés sur une ou plusieurs pages des feuilles intérieures et/ou intégrés à celles-ci.

La demande internationale WO 2007/034129 décrit un document comportant une couverture et une feuille intérieure présentant une page de données sécurisées. La page de données comporte notamment une couche sur laquelle figure des données personnelles visibles relatives au porteur du document et une autre couche comportant un dispositif électronique dans lequel est stocké tout ou partie de ces données personnelles, les deux couches étant laminées entre deux autres couches en plastique. Un tel document présente plusieurs inconvénients, notamment en ce qu'il est quasiment impossible de pouvoir personnaliser le document après fabrication. En effet, la présence de couches en plastique rend difficile la personnalisation physique de la page de données du livret avec des impressions de données visibles après le montage du livret. De plus, il s'avère également difficile de personnaliser numériquement le document avec un enregistrement de tout ou partie de données personnelles dans la puce simultanément à la personnalisation physique du document par des impressions visibles de ces données.

Par ailleurs, il est connu d'utiliser comme moyen de sécurité dans les documents de sécurité des filigranes qui permettent d'authentifier un document par observation en lumière transmise.

Les filigranes permettent de protéger de la copie par des moyens optiques tels que la photocopie, la photographie ou la numérisation.

Les filigranes peuvent également être utilisés à des fins décoratives et de prestige, notamment pour les papiers impression-écriture, par exemple pour les têtes de lettres ou des papiers d'art comme les papiers pour aquarelle.

Les filigranes sont classiquement obtenus lors de la fabrication d'une feuille de papier en phase humide par le dépôt de la pâte à papier sur la toile embossée d'une machine à papier à forme ronde, la quantité de pâte déposée étant plus élevée dans les creux et moindre sur les bosses par rapport au reste du papier.

Les filigranes peuvent aussi être réalisés par embossage d'une feuille humide par un rouleau filigraneur (appelé aussi « dandy roll ») sur une machine à papier à table plate.

Il est aussi connu de réaliser des pseudo-filigranes sur une feuille de papier. Les pseudo-filigranes reproduisent l'apparence d'un filigrane en présentant des différences d'opacité. DE 3909351 décrit un film comportant une couche PVC avec des particules d'aluminium formant, lorsque le film est éclairé par un laser, une image négative ayant l'aspect d'un filigrane. Ces pseudo-filigranes peuvent être obtenus mécaniquement sur la feuille par apport de pression avec ou sans chaleur et/ou chimiquement par application d'une composition par exemple en augmentant localement la transparence du papier grâce à des substances transparentisantes. La densité de matière fibreuse entre les zones les plus claires et les plus sombres du pseudo-filigrane peut être uniforme à la différence d'un filigrane conventionnel.

En outre, afin d'augmenter le niveau de sécurisation des documents de sécurité et de rendre leur falsification plus difficile, il est également connu d'y incorporer des dispositifs à microcircuit intégré, notamment RFID (dispositifs d'identification radiofréquence). Ces dispositifs, sous forme par exemple de puce associée à une antenne, permettent de stocker et éventuellement de modifier des informations propres au porteur ou à l'objet auquel ils se rapportent, au type de document émis ou à l'historique des évènements.

On connaît par exemple des cartes d'identité en plastique comportant un dispositif RFID, réalisées à partir d'un assemblage de couches polymériques. De telles cartes ne comportent que peu ou pas d'éléments de sécurité d'authentification, notamment visuelle, si ce n'est parfois des embossages de surface ou des hologrammes appliqués par transfert. De la sorte, il est relativement aisé pour un fraudeur de reproduire les impressions, les personnalisations ou les sécurités visuelles présentes sur de telles cartes à partir d'une carte vierge en plastique.

On connaît encore des cartes de sécurité comportant deux couches de polyéthylène comportant chacune un pseudo-filigrane réalisé par embossage en creux ou en relief, les deux pseudo-filigranes se combinant lors d'une observation en lumière transmise.

### Résumé

Il existe un besoin pour renforcer encore la sécurité des documents de sécurité.

Il existe notamment un besoin pour proposer de nouvelles sécurités aux documents à volets contre les falsifications ou contrefaçons, qui soient facilement observables tout en présentant un niveau de sécurisation suffisant, plus difficiles à contrefaire et à détourner.

Il existe encore un besoin pour proposer une nouvelle sécurité aux documents à volets permettant leur personnalisation avant, pendant ou après la fabrication des documents, notamment une personnalisation physique, par exemple à l'aide d'impressions et/ou d'un autre type de personnalisation, ou numérique, par exemple à l'aide d'un dispositif à microcircuit intégré présent dans le document.

L'invention a ainsi pour objet, selon l'un de ses aspects, un document à volets comportant :
- un support définissant au moins deux volets reliés par au moins une ligne de pliage,
- une structure liée au support, notamment au niveau de la ligne de pliage, avec une possibilité de déplacement relativement à celui-ci et s'étendant au moins partiellement entre les deux volets lorsque le document à volets est plié, la structure comportant :
- une couche fibreuse,
- une sous-structure comportant une région translucide,
- un filigrane ou pseudo-filigrane porté par la couche fibreuse et se superposant au moins partiellement à la région translucide de la sous-structure, de telle sorte que le filigrane ou pseudo-filigrane ne soit observable en lumière transmise à travers la structure, au niveau de la région translucide de la sous-structure, que de la face de la structure située du côté de la couche fibreuse, c'est-à-dire la face adjacente à la couche fibreuse.

Par exemple, dans le cas d'un document tel qu'un passeport, le support peut consister en la couverture du passeport sur laquelle une feuille fibreuse formant la page de garde et la page de fin est destinée à être collée.

La structure peut encore comporter, dans son épaisseur, un dispositif à microcircuit intégré, notamment à communication sans contact et/ou avec contact. En particulier, le dispositif à microcircuit intégré peut être porté par la sous-structure.

Grâce à l'invention, il est possible de bénéficier d'une structure de sécurité dans un document à volets offrant la sécurité liée à la présence d'au moins un filigrane ou pseudo-filigrane, et éventuellement liée à la présence d'un dispositif à microcircuit intégré. De plus, la présence d'au moins une couche fibreuse peut permettre la personnalisation physique, notamment par impression, du document à volets, que ce soit avant, pendant ou après la fabrication du document à volets, notamment le scellage ou le collage d'une ou de plusieurs couches fibreuses avec la sous-structure.

Par ailleurs, dans un document à livrets traditionnel, on peut trouver des feuilles intérieures comportant une couche fibreuse filigranée et telle que le filigrane soit observable en lumière transmise de chaque côté de la couche fibreuse. Avantageusement, l'invention apporte quant à elle un nouveau moyen de sécurisation des documents à volets, grâce à la présence d'une structure comportant une couche fibreuse filigranée telle que le filigrane ne soit observable en lumière transmise au niveau de la région translucide que de la face de la structure située du côté de la couche fibreuse filigranée.

Le déplacement de la structure relativement au support peut correspondre à une rotation autour de l'axe formé par la ligne de pliage du document à volets. La structure peut en particulier être déplacée de façon semblable à une feuille intérieure du document à volets.

La structure peut correspondre à une feuille intérieure du document à volets.

En particulier, la structure peut correspondre à une feuille intérieure présentant au moins une page de données sur laquelle figurent des données personnelles, par exemple sous la forme d'impressions, et éventuellement une photographie du porteur du document à volets.

De préférence, la structure, notamment la sous-structure, n'est pas collée, laminée ou fusionnée, entièrement au support du document à volets. En particulier, la structure ne correspond pas, de préférence, à une feuille intérieure du document à volets assimilable à une page de garde ou à une page de fin du document, collée au support (ou couverture) du document à volets afin de permettre son observation en lumière transmise.

La sous-structure peut être liée au support, et en particulier à la couche fibreuse, uniquement au niveau de la ligne de pliage, c'est-à-dire que la sous-structure est mobile de la même manière qu'une feuille intérieure. Dans ce cas, la sous-structure est mobile en rotation autour de l'axe formé par la ligne de pliage du document à volets. Dans le cas du passeport, la sous-structure est disposée dans le livret des feuilles intérieures du document à volets en étant mobile par rapport à la couche fibreuse portant le filigrane ou pseudo-filigrane autour de l'axe de la ligne de pliage. De préférence, la sous-structure et la couche fibreuse portant le filigrane ou pseudo-filigrane sont adjacentes dans le livret des feuilles intérieures, au moins dans la position fermée du passeport. Pour procéder à l'authentification du document, il suffit alors de maintenir ensemble la sous-structure et la couche fibreuse de manière superposée pour constater que le filigrane ou pseudo-filigrane n'est observable en lumière transmise à travers la structure, au niveau de la région translucide de la sous-structure, que de la face de la structure située du côté de la couche fibreuse.

La structure, notamment la sous-structure, peut être liée au support totalement ou partiellement, par exemple par au moins une partie d'un bord de celle-ci, par une charnière, par une reliure spiralée, par une couture, par collage, par scellage, par fusion, par pliage, par agrafage, entre autres. La structure, notamment la sous-structure, peut être liée au support au niveau de la ligne de pliage et/ou d'un bord du support, par exemple un bord inférieur ou supérieur du support.

La structure peut être pliée par rapport au support, en particulier le long d'une zone de pliage commune à la zone de pliage du support. Au moins une partie de la structure peut s'étendre sur un volet et déborder sur un second volet selon une bande parallèle à la ligne de pliage, notamment au niveau d'un bord, la bande permettant de la lier au support du document à volets. La structure et/ou la bande peut comporter par exemple des perforations pour permettre de lier la structure au support, au niveau de la ligne de pliage, par exemple à l'aide d'une spirale.

Deux feuilles intérieures du document à volets peuvent être formées à partir d'une seule et même feuille pliée sur elle-même et reliée selon une ligne de pliage pour former les deux feuilles intérieures.

Deux feuilles intérieures du document à volets peuvent encore être formées à partir d'au moins deux feuilles différentes pliées et reliées entre elles selon leur ligne de pliage pour former les deux feuilles intérieures.

### Filigrane(s) ou pseudo-filigrane(s)

La structure peut comporter un filigrane porté par la couche fibreuse et se superposant au moins partiellement à la région translucide de la sous-structure, de telle sorte que le filigrane ne soit observable en lumière transmise à travers la structure au niveau de la région translucide que de la face de la structure située du côté de la couche fibreuse, c'est-à-dire de la face de la structure opposée à celle en contact avec la sous-structure.

En variante, la structure peut comporter un pseudo-filigrane porté par la couche fibreuse et se superposant au moins partiellement à la région translucide de la sous-structure, de telle sorte que le pseudo-filigrane ne soit observable en lumière transmise à travers la structure au niveau de la région translucide que de la face de la structure située du côté de la couche fibreuse, c'est-à-dire de la face de la structure opposée à celle en contact avec la sous-structure.

La structure peut comporter deux couches fibreuses, la sous-structure comportant une région translucide étant située entre les couches fibreuses, au moins dans la position de superposition. Dans ce cas, celles-ci peuvent comporter chacune un filigrane ou pseudo-filigrane, lequel n'est observable en lumière transmise à travers la structure, au niveau de la région translucide de la sous-structure, que de la face de la structure située du côté de la couche fibreuse qui le porte lorsque les couches fibreuses et la sous structure sont superposées. Ainsi, les observations des filigranes ou pseudo-filigranes se font de manière distincte à partir de faces respectives différentes de la structure.

Dans un exemple de mise en oeuvre de l'invention, la structure présente une face recto et une face verso, comporte une première couche fibreuse portant au moins un premier filigrane ou pseudo-filigrane et une seconde couche fibreuse portant au moins un second filigrane ou pseudo-filigrane, le premier filigrane ou pseudo-filigrane n'étant observable en lumière transmise, au moins partiellement, que de la face recto de la structure et le second filigrane ou pseudo-filigrane n'étant observable en lumière transmise, au moins partiellement, que de la face verso de la structure. De plus, les filigranes ou pseudo-filigranes sont de préférence au moins partiellement juxtaposés dans la région translucide de la sous-structure. Tout ou partie de ces filigranes ou pseudo-filigranes peuvent ainsi ne pas être observables simultanément en lumière transmise d'un même côté de la structure au niveau de la région translucide de la sous-structure. La région translucide de la sous-structure peut ainsi permettre d'empêcher une combinaison des filigranes ou pseudo-filigranes entre eux.

Alternativement, la sous-structure peut être liée à deux couches fibreuses uniquement par la ligne de pliage de façon à être disposée dans le livret des feuilles intérieures en sandwich entre les deux couches fibreuses portant chacune un filigrane ou pseudo-filigrane. Dans ce cas, la sous-structure est disposée dans le livret des feuilles intérieures du document à volets en étant mobile par rapport à chacune des couches fibreuses autour de l'axe de la ligne de pliage. Pour procéder à l'authentification du document, il suffit alors de maintenir ensemble de manière superposée la sous-structure et les couches fibreuses pour constater que le filigrane ou pseudo-filigrane d'une couche fibreuse n'est observable en lumière transmise à travers la structure, au niveau de la région translucide de la sous-structure, que de la face de la structure située du côté de cette couche fibreuse.

On entend par « filigrane ou pseudo-filigrane » selon l'invention, une image dessinée qui apparaît dans l'épaisseur de la structure.

Le filigrane ou pseudo-filigrane peut être réalisé de différentes manières connues par l'homme du métier.

Le filigrane peut être un dessin gravé ou pressé dans une couche fibreuse lors de sa fabrication. Un tel filigrane peut par exemple se voir par transparence en créant des amincis ou des surcharges de pâtes au moment de la fabrication de la couche fibreuse sur une machine à papier à forme ronde grâce à une empreinte en relief ou en creux dans la toile de formation de la forme ronde. De la sorte, des différences d'opacité sont créées et les zones plus denses en pâte apparaissent plus sombres que les zones moins denses qui apparaissent plus claires par rapport au reste de la feuille (dite partie véline), lorsqu'on observe la feuille (après séchage) en lumière transmise. Les filigranes ayant différents niveaux de gris selon la hauteur des embossages sont dits « filigranes multitons ».

Le filigrane peut encore provenir de zones où la couche fibreuse a été pressée sur une machine à papier à table plate grâce à un rouleau filigraneur qui comporte la gravure du filigrane en relief, ce qui a pour effet de presser fortement certaines zones de la couche fibreuse et de chasser l'eau contenue dans les fibres au moment de la formation de la couche fibreuse en partie humide.

Le pseudo-filigrane peut être aussi produit dans la couche fibreuse finie par des moyens mécaniques et/ou chimiques par application de certains produits, ce dessin étant toujours visible en transparence.

Le pseudo-filigrane peut par exemple être réalisé en déposant ou en imprimant dans des zones déterminées de la couche fibreuse une composition qui modifie la transparence de la couche fibreuse, notamment afin de réaliser des zones claires et des zones sombres, semblables à celles d'un filigrane, sans toutefois obtenir un résultat permettant d'obtenir des finesses et des variantes de luminosité comparables à celles d'un filigrane classique.

On peut par exemple transparentiser la couche fibreuse finie en appliquant dans des zones déterminées, par exemple une composition généralement grasse qui transparentise la couche fibreuse de façon permanente, comme par exemple une composition faite d'huile et de matériau minéral transparent comme décrit dans le brevet US 2 021 141 ou comme par exemple une composition sous forme d'une cire combinée à un solvant comme décrit dans le brevet US 1 479 337.

On peut aussi transparentiser la couche fibreuse finie en appliquant localement une cire par transfert à chaud, comme décrit dans le brevet US 5 118 526.

On peut encore utiliser une couche fibreuse comportant une matière thermofusible, par exemple du polyéthylène comme décrit dans le brevet EP 0 203 499, qui sous l'action locale de la chaleur verra sa transparence varier.

On peut opacifier la couche fibreuse finie, sans toutefois la rendre complètement opaque, en appliquant dans des zones déterminées un agent opacifiant qui augmente l'opacité de la couche fibreuse, comme par exemple décrit dans la demande de brevet FR 2 353 676.

L'agent opacifiant peut par exemple être une suspension aqueuse d'un pigment ou d'une charge ou une solution d'un composé chimique, d'un composé coloré ou d'une teinture. Cet agent peut être appliqué pendant la fabrication de la couche fibreuse, sur la nappe fibreuse, et avant son enlèvement de la toile, de sorte que l'agent pénètre dans les interstices de la nappe et provoque une modification de l'opacité de la nappe à traiter dans des zones choisies, après séchage. Cette technique de fabrication a l'inconvénient de nécessiter des dispositifs spéciaux de rouleaux pour appliquer l'agent, et d'employer de préférence un dispositif d'aspiration pour faire pénétrer l'agent dans les interstices de la nappe.

On peut encore réaliser un pseudo-filigrane selon le procédé décrit dans le document W. WALENSKI, « Watermarks and Those that Are Not », Druckspiegel 52, n°3 : 66-68 (March 1997). Ce document décrit un procédé de fabrication d'un pseudo-filigrane sur un papier non couché, comportant l'application sous chaleur et pression d'une pièce de marquage, représentant le motif du pseudo-filigrane, sur une feuille de papier remouillé.

La demande internationale WO 97/17493 décrit également la fabrication de papier couché comportant des pseudo-filigranes résultant d'une variation du poids de couche appliqué dans des zones déterminées, ce qui induit une variation d'épaisseur et d'opacité dans les zones où le poids de couche est réduit ou augmenté.

La demande internationale WO 1999/014433 décrit également un autre procédé de fabrication d'un pseudo-filigrane sur un papier couché, qui prévoit de réaliser une image dans le papier après l'étape de séchage qui suit la dernière opération de couchage, en effectuant les étapes dans lesquelles on applique une solution de remouillage sur au moins une face du papier couché, dans une ou plusieurs zones déterminées, et on applique une pression et une chaleur dans la ou les zones du papier couché remouillé de manière à évaporer la solution et densifier le papier couché dans la ou les zones par rapport au reste du papier.

Le pseudo-filigrane peut enfin être réalisé par voie mécanique en réalisant des marques par embossage mécanique de zones déterminées de la couche fibreuse comme décrit dans le brevet DE 3 718 452.

Lorsque les deux couches fibreuses de la structure comportent chacune un filigrane ou pseudo-filigrane, les deux filigranes ou pseudo-filigranes peuvent être différents. En particulier les filigranes ou pseudo-filigranes peuvent être complémentaires. Ils peuvent être complémentaires dans leur effet visuel ou par rapport à un concept ou une image. On peut par exemple, dans le cas d'une structure d'un document à volets selon l'invention, mettre comme premier filigrane ou pseudo-filigrane d'un côté un emblème national et comme second filigrane ou pseudo-filigrane de l'autre côté, un texte. Dans le cas d'un bon d'achat, on peut mettre respectivement le logo de la société émettrice et la valeur du bon.

Selon un autre exemple de réalisation, les deux filigranes ou pseudo-filigranes sont identiques mais placés de façon symétrique de chaque côté de la zone translucide de la sous-structure. Dans le cas d'une authentification, il peut alors être intéressant de vérifier cette identité visuelle entre les filigranes ou pseudo-filigranes lorsqu'ils sont observés de chacune des deux faces de la structure (par exemple un personnage regardant toujours du même coté que ce soit par observation de la face située du côté de la première couche fibreuse ou de la face située du côté de la seconde couche fibreuse).

Selon encore un autre exemple de réalisation, les deux filigranes ou pseudo-filigranes sont au moins partiellement en regard l'un de l'autre.

### Dispositif à microcircuit intégré

Le dispositif à microcircuit intégré peut être adapté à la technologie de communication sans contact, par exemple telle que celle décrite dans les normes ISO 14443, ISO 15693 et ISO 18000.

En variante, le dispositif à microcircuit intégré peut être adapté à la technologie de communication avec contact, par exemple telle que celle décrite dans la norme ISO 7816.

La structure peut comporter un dispositif à microcircuit intégré à communication avec contact et un dispositif à microcircuit intégré à communication sans contact, voire un dispositif à microcircuit intégré permettant à la fois une lecture avec contact et une lecture sans contact. Le dispositif à microcircuit intégré selon l'invention peut comporter en particulier deux modules électroniques, l'un pour la technologie avec contact, l'autre pour la technologie sans contact, par exemple pour carte à puce hybride ou un module électronique double face contact/sans contact pour carte à puce duale.

Le dispositif à microcircuit intégré peut être capable de communiquer avec un lecteur externe. Par « lecteur externe », on désigne tout dispositif qui permet de communiquer avec le dispositif à microcircuit intégré, de l'activer, de l'authentifier, de lire des données qui y sont contenues, de recevoir ces données et le cas échéant, de les modifier, voire de les supprimer partiellement ou totalement. Le lecteur externe peut fonctionner à distance ou nécessiter un contact.

Le dispositif à microcircuit intégré peut résulter de l'association d'une puce avec au moins une antenne dans le cas d'un système sans contact.

Une puce comporte par exemple une base semi-conductrice, en général une galette de silicium dopée, parfois faite d'un polymère semi-conducteur, et comporte aussi en général une mémoire, voire un ou plusieurs microprocesseurs, permettant de traiter des données. Pour fonctionner, elle peut recevoir l'énergie d'une batterie ou d'une pile ou être alimentée par une source d'énergie électrique apportée par contact et/ou sans contact, c'est-à-dire dans ce dernier cas, à distance par l'intermédiaire d'une interface de communication via une antenne. La puce est par exemple reliée à l'antenne selon une alimentation sans contact de type inductif ou capacitif. Les puces avec antenne sont appelées « transpondeurs » et utilisent en général les ondes radiofréquence.

Dans le cas où le dispositif à microcircuit intégré est dit « actif », la puce peut comporter une batterie, encore appelée « micro-batterie », intégrée dans son microcircuit ou être reliée à une micro-batterie intégrée à la structure. Par « batterie », il faut comprendre une source d'énergie d'origine électrochimique, rechargeable ou non.

La puce peut encore être alimentée par un système photovoltaïque.

L'antenne du dispositif à microcircuit intégré sans contact peut être de type filaire, imprimée, notamment en sérigraphie, gravée, collée, transférée, déposée chimiquement, réalisée par galvanoplastie, ou encore portée par le dispositif à microcircuit intégré.

L'antenne du dispositif à microcircuit intégré sans contact peut être portée par une couche fibreuse, par la sous-structure ou par une couche adhésive, notamment une couche adhésive servant à assembler une ou des couches fibreuses et/ou la sous-structure.

L'antenne peut être située sur l'une des faces de la sous-structure ou être incorporée totalement dans celle-ci. L'antenne peut être réalisée sur la sous-structure avant assemblage avec une couche fibreuse.

L'antenne peut être située entre une couche fibreuse ét la sous-structure. En particulier, l'antenne peut être portée par une face d'une couche fibreuse en contact avec la sous-structure. L'antenne peut être réalisée sur la couche fibreuse avant assemblage avec la sous-structure.

Le dispositif à microcircuit intégré peut être situé sur l'une des faces de la sous-structure.

En variante, le dispositif à microcircuit intégré est situé hors de la structure, en particulier dans une couche fibreuse du document à volet, notamment dans la couverture dudit document.

Le dispositif à microcircuit intégré peut être incorporé au moins partiellement dans une couche fibreuse.

En variante, le dispositif à microcircuit intégré peut être incorporé totalement dans la sous-structure.

Le dispositif à microcircuit intégré peut être visible au moins partiellement sur l'une des faces de la structure, notamment lorsqu'il est avec contact.

Le dispositif à microcircuit intégré peut être logé, au moins partiellement, dans la sous-structure, c'est-à-dire que tout ou partie du dispositif à microcircuit intégré est compensé en épaisseur par la sous-structure. Ceci permet par exemple de protéger le dispositif à microcircuit intégré, lequel est généralement une pièce fragile, tout en rendant l'accès à celui-ci par d'éventuels faussaires particulièrement difficile. Le dispositif à microcircuit intégré peut encore être compensé au moins partiellement en épaisseur par une couche adhésive de la sous-structure, servant à l'assembler à une ou plusieurs couches fibreuses. L'épaisseur de la sous-structure peut dépasser celle du dispositif à microcircuit intégré.

Selon un exemple de réalisation, le dispositif à microcircuit intégré affleure à au moins une face de la sous-structure. Le dispositif à microcircuit intégré peut affleurer à chacune des faces de la sous-structure.

Le dispositif à microcircuit intégré peut être associé, par exemple connecté, avec un ou plusieurs dispositif(s) électronique(s), choisi(s) dans la liste suivante :
- un système électroluminescent, notamment LED ou OLED,
- un dispositif d'affichage, par exemple un écran,
- un capteur,
- une antenne de couplage,
- un interrupteur.

Le dispositif à microcircuit intégré peut aussi comporter un ou plusieurs des dispositifs électroniques mentionnés ci-dessus. En variante, le ou les dispositifs électroniques peuvent être indépendants du dispositif à microcircuit intégré, étant de préférence liés au dispositif à microcircuit intégré par une liaison filaire, optique ou radioélectrique, par exemple par couplage inductif

Le ou les dispositifs électroniques peuvent être alimentés en électricité par une batterie présente sur le dispositif à microcircuit intégré, notamment par une micro-batterie sur puce.

Le ou les dispositifs électroniques peuvent encore être alimentés par une pile ou une batterie externe, non présente sur le dispositif à microcircuit intégré, par exemple une batterie sur couches minces flexibles distinctes d'une puce ou par une cellule photovoltaïque, par exemple au moins partiellement imprimée.

Le ou les dispositifs électroniques peuvent encore être alimentés par couplage capacitif ou inductif, par exemple lors d'une communication entre le dispositif à microcircuit intégré et un lecteur externe.

Le ou les dispositifs électroniques, et éventuellement le ou les dispositifs d'alimentation associés, par exemple une ou plusieurs batteries, peuvent être logées dans l'épaisseur d'une des couches de la structure, ou en variante être réalisées par impression sur une des couches de la structure.

Dans un exemple de réalisation, le ou les dispositifs électroniques sont ajoutés à la structure comme moyen de sécurisation supplémentaire pouvant ou non interagir avec l'extérieur. Par exemple, le dispositif électronique peut être un interrupteur qui actionne un dispositif électroluminescent.

Le ou les dispositifs électroniques peuvent correspondre à un détecteur. Le détecteur peut être configuré pour détecter un changement d'au moins une grandeur physicochimique. La détection peut s'effectuer hors du champ de lecture d'un lecteur externe capable d'obtenir du dispositif à microcircuit intégré au moins une information relative audit changement, et le dispositif à microcircuit intégré peut être configuré pour signaler au lecteur externe lors d'une communication avec celui-ci, une tentative d'atteinte à l'intégrité physique de la structure suite à la détection d'un changement correspondant de ladite au moins une grandeur physicochimique.

Le dispositif à microcircuit intégré est avantageusement apte à garder en mémoire le ou les changements.

Par « grandeur physicochimique », on désigne un paramètre ou une propriété caractéristique intrinsèque de la structure ou d'un élément présent dans ou sur la structure, la valeur de ce paramètre ou de cette propriété étant modifiée lors d'une intrusion ou d'une violation physique de la structure.

Dans un autre exemple de mise en oeuvre de l'invention, le ou les dispositifs électroniques sont incorporés à la structure dans le but d'ajouter une fonctionnalité particulière, par exemple associée au dispositif à microcircuit intégré ou à un autre dispositif électronique. Par exemple, un dispositif électronique peut être une cellule photovoltaïque qui recharge une batterie utilisée par un capteur.

Le dispositif à microcircuit intégré peut encore être intégré dans le support du document à volets.

Dans ce cas, la sous-structure peut par exemple correspondre à un élément de perturbation électromagnétique ou « bouclier magnétique ».

Un élément de perturbation électromagnétique peut comporter des moyens d'atténuation, de perturbation ou de blocage du couplage électromagnétique entre un dispositif à microcircuit intégré, notamment sans contact, et un lecteur externe, de type matériau magnétique, matériau conducteur ou circuit résonateur.

La sous-structure ayant le rôle d'élément de perturbation électromagnétique doit cependant pouvoir présenter les propriétés suffisantes pour permettre l'observation du ou des filigranes ou pseudo-filigranes que d'une des faces de la structure, notamment des propriétés suffisantes en termes de transparence et de diffusion de la lumière.

Ainsi, dans au moins une configuration pliée du document à volets, par exemple lorsque l'angle entre le premier volet et le deuxième volet est inférieur ou égal à 10°, l'élément de perturbation électromagnétique empêche l'accès en lecture et/ou en écriture aux informations enregistrées dans le dispositif à microcircuit intégré, que le lecteur soit situé devant le premier ou le deuxième volet.

En variante, le dispositif à microcircuit intégré peut être intégré dans le support du document à volets, et la sous-structure peut correspondre à un élément d'amplification électromagnétique ou « booster » électromagnétique.

L'élément d'amplification électromagnétique peut permettre d'augmenter la distance de communication entre le dispositif à microcircuit intégré et un lecteur externe.

### Eléments de sécurité

La structure, notamment la sous-structure et/ou la ou les couches fibreuses de la structure, peut comporter un ou plusieurs éléments de sécurité.

Parmi les éléments de sécurité, certains sont détectables à l'oeil nu, en lumière du jour ou en lumière artificielle, sans utilisation d'un appareil particulier. Ces éléments de sécurité comportent par exemple des fibres ou planchettes colorées, des fils imprimés ou métallisés totalement ou partiellement. Ces éléments de sécurité sont dits de premier niveau.

D'autres types d'éléments de sécurité sont détectables seulement à l'aide d'un appareil relativement simple, tel qu'une lampe émettant dans l'ultraviolet ou l'infrarouge. Ces éléments de sécurité comportent par exemple des fibres, des planchettes, des bandes, des fils ou des particules. Ces éléments de sécurité peuvent être visibles à l'oeil nu ou non, étant par exemple luminescents sous un éclairage d'une lampe de Wood émettant dans une longueur d'onde de 365 nm. Ces éléments de sécurité sont dits de deuxième niveau.

D'autres types d'éléments de sécurité encore nécessitent pour leur détection un appareil de détection plus sophistiqué. Ces éléments de sécurité sont par exemple capables de générer un signal spécifique lorsqu'ils sont soumis, de manière simultanée ou non, à une ou plusieurs sources d'excitation extérieure. La détection automatique du signal permet d'authentifier, le cas échéant, le document. Ces éléments de sécurité comportent par exemple des traceurs se présentant sous la forme de matière active, de particules ou de fibres, capables de générer un signal spécifique lorsque ces traceurs sont soumis à une excitation optronique, électrique, magnétique ou électromagnétique. Ces éléments de sécurité sont dits de troisième niveau.

Les éléments de sécurité présents au sein de la sous-structure et/ou de la ou des couches fibreuses peuvent présenter des caractéristiques de sécurité de premier, de deuxième ou de troisième niveau.

La structure, notamment la sous-structure, peut en particulier comporter comme éléments de sécurité, entre autres :
- des colorants et/ou des pigments luminescents et/ou des pigments interférentiels et/ou des pigments à cristaux liquides, notamment sous forme imprimée ou mélangée à au moins un polymère d'au moins une couche de la sous-structure,
- des colorants et/ou des pigments photochromes ou thermochromes, notamment sous forme imprimée ou mélangée à au moins un polymère d'au moins une couche de la sous-structure,
- un absorbeur ultraviolet (UV), notamment sous forme enduite ou mélangée à au moins un polymère de la sous-structure,
- un matériau spécifique collecteur de lumière, par exemple du type « guide d'ondes », par exemple un matériau collecteur de lumière luminescent comme les films polymères à base de polycarbonate commercialisés par la société BAYER sous la dénomination LISA®,
- un film multicouche interférentiel,
- une structure à effets optiques variables à base de pigments interférentiels ou de cristaux liquides,
- une couche biréfringente ou polarisante,
- une structure de diffraction,
- une image embossée,
- des moyens produisant un "effet de moiré", un tel effet pouvant par exemple faire apparaître un motif produit par la superposition de deux éléments de sécurité sur la sous-structure, par exemple par le rapprochement de lignes de deux éléments de sécurité,
- un élément réfractif partiellement réfléchissant,
- une grille lenticulaire transparente,
- un élément comportant une image combinée comportant au moins deux images imbriquées et/ou un moyen de révélation, choisi parmi une trame de révélation et/ou un réseau lenticulaire, associé à l'image combinée, l'un au moins de l'image combinée et du moyen de révélation figurant sur une zone de la structure ou de la sous-structure au moins partiellement transparente, le moyen de révélation permettant lorsque superposé au moins partiellement à l'image combinée d'observer successivement les images imbriquées,
- une lentille, par exemple une loupe,
- un filtre coloré.

La structure, notamment la sous-structure et/ou la ou les couches fibreuses, peuvent encore comporter comme éléments de sécurité, entre autres :
- un fil de sécurité incorporé par exemple dans la masse d'une des couches fibreuses ou en fenêtre, comportant éventuellement une impression imprimée en positif ou en négatif, une fluorescence, un effet métallique, goniochromatique ou holographique, avec ou non une ou plusieurs parties démétallisées, un effet optique de type lenticulaire comme par exemple le fil MOTION^{®} commercialisé par la société BGI,
- un foil métallisé, goniochromatique ou holographique,
- une couche à effet optique variable à base de pigments interférentiels ou de cristaux liquides,
- un élément de sécurité plat et de format relativement petit tel qu'une planchette, visible ou non visible, notamment luminescent,
- des particules ou agglomérats de particules de pigments ou colorants de type HI-LITE, visibles ou non visibles, notamment luminescents,
- des fibres de sécurité, notamment métalliques, magnétiques (à magnétisme doux et/ou dur), ou absorbantes, ou excitables aux ultraviolets, le visible ou l'infrarouge, et en particulier le proche infrarouge (NIR),
- des composants photochromes ou thermochromes,
- une sécurité lisible automatiquement ayant des caractéristiques spécifiques et mesurables de luminescence (par exemple fluorescence, phosphorescence), d'absorption de la lumière (par exemple ultraviolet, visible ou infrarouge), d'activité Raman, de magnétisme, d'interaction micro-ondes, d'interaction aux rayons X ou de conductivité électrique.

Un ou plusieurs éléments de sécurité tels que définis plus haut peuvent être présents dans la sous-structure et/ou la ou les couches fibreuses ou dans un ou plusieurs éléments de sécurité incorporés à la sous-structure et/ou à la ou les couches fibreuses, comme par exemple un fil, une fibre ou une planchette.

La structure peut également comporter un ou plusieurs éléments de sécurité dits « d'infalsification », comme par exemple des réactifs aux produits chimiques, par exemple capables de provoquer une réaction colorée en présence de produits chimiques spécifiques, par exemple des produits chimiques utilisés par les fraudeurs.

### Couche(s) fibreuse(s)

La structure peut comporter au moins une couche fibreuse qui peut porter un filigrane ou pseudo-filigrane et, de préférence, la structure comporte deux couches fibreuses portant chacune un filigrane ou pseudo-filigrane, comme mentionné ci-dessus.

La couche fibreuse peut comporter un ou plusieurs jets fibreux assemblés, notamment par contrecollage ou par assemblage en partie humide de la machine à papier lors de la fabrication de ladite couche fibreuse.

Les deux filigranes ou pseudo-filigranes sont, au moins partiellement superposable dans une configuration d'observation de la structure avec les couches fibreuse prenant en sandwich la sous structure dans la région translucide, des deux couches fibreuses peuvent avantageusement ne pas se combiner visuellement au niveau de la région translucide de la sous-structure.

Le filigrane ou pseudo-filigrane, au moins partiellement superposés à la région translucide de la sous-structure, d'une couche fibreuse peut comporter une portion qui se combine visuellement avec une portion du filigrane ou pseudo-filigrane de l'autre couche fibreuse en dehors de la région translucide de la sous-structure, et une autre portion qui ne se combine visuellement avec aucune portion du filigrane ou pseudo-filigrane de l'autre couche fibreuse au niveau de la région translucide de la sous-structure.

Le filigrane ou pseudo-filigrane de chaque couche fibreuse peut n'être visible au moins partiellement que sur la face de la couche fibreuse le comportant, notamment au niveau de la région translucide de la sous-structure. Le filigrane ou pseudo-filigrane de chaque couche fibreuse peut être visible au moins partiellement sur la face de la couche fibreuse ne le comportant pas, notamment en dehors de la région translucide de la sous-structure.

Les deux couches fibreuses peuvent encore comporter chacune un ou plusieurs filigranes ou pseudo-filigranes, au moins partiellement superposés à la région translucide de la sous-structure, qui se combinent visuellement entre eux en dehors de la région translucide de la sous-structure pour former un motif. Les couches fibreuses peuvent être collées, laminées ou fusionnées à la sous-structure notamment au niveau de la région translucide. Alternativement, les couches fibreuses sont simplement liées à la sous-structure de manière mobile selon l'axe de rotation de la ligne de pliage.

La ou les couches fibreuses peuvent être réalisées sur une machine à papier à table plate ou à forme ronde, et les filigranes peuvent être incorporés à la ou aux couches fibreuses en partie humide selon les procédés classiques connus de l'homme du métier.

La ou les couches fibreuses peuvent encore être réalisées sur une machine à papier à table plate ou à forme ronde, et les pseudos filigranes peuvent être réalisés sur les couches finies par des moyens mécaniques ou chimiques selon les procédés classiques connus de l'homme du métier.

Au moins une couche fibreuse peut comporter des impressions, notamment de personnalisation, réalisées, par exemple en offset, par héliogravure, sérigraphie ou flexographie, en taille douce, par typographie, par laser ou jet d'encre. Les impressions peuvent par exemple correspondre à des mentions fixes et/ou aux mentions variables d'un document d'identité. Les impressions peuvent comporter une photographie, par exemple celle du titulaire du document.

Au moins une couche fibreuse peut par exemple être à base de papier du type LASERGUARD^{®} ou JETGUARD^{®}, commercialisés par la société ARJOWIGGINS.

Au moins une couche fibreuse peut être colorée, fluorescente, iridescente ou présenter tout autre nuance ou effet optique.

Au moins une couche fibreuse peut être à base de fibres cellulosiques, par exemple des fibres de coton, et/ou de fibres synthétiques et/ou de fibres organiques naturelles autres que cellulosiques et/ou de fibres minérales.

Au moins une couche fibreuse peut présenter un grammage compris entre 60 et 230 g/m², de préférence entre 70 et 90 g/m².

Au moins une couche fibreuse peut avoir une épaisseur comprise entre 60 et 220 µm, de préférence entre 70 et 110 µm, par exemple d'environ 100 µm.

Dans un exemple de mise en oeuvre de l'invention, au moins une couche fibreuse comporte un évidement, par exemple une ouverture sous forme d'une réserve sans fibres, réalisée par exemple sur une machine à papier ou hors d'une machine à papier, par exemple à l'emporte pièce, par découpe laser ou par jet d'eau. L'évidement est de préférence réalisé dans une partie de la couche fibreuse ne comportant pas ou ne recouvrant pas la région translucide de la sous-structure au niveau du dispositif à microcircuit intégré. Deux couches fibreuses peuvent comporter chacune un tel évidement, les évidements étant par exemple en regard l'un de l'autre. De la sorte, la structure peut présenter une fenêtre transparente du fait de la transparence de la sous-structure. Cette fenêtre peut constituer un élément de sécurité ou loger un ou plusieurs éléments de sécurité, notamment optiques, ou faciliter leur observation. Par exemple, un ou plusieurs éléments de sécurité, notamment optiques, peuvent être situés dans la sous-structure, et être observables grâce à la fenêtre précitée. Cette fenêtre peut être aussi personnalisée, par exemple pour montrer un motif ou un élément imprimé, gravé, embossé ou perforé, relatif au porteur ou à l'objet auquel il se rapporte.

Une première impression peut être réalisée sur la face recto de la sous-structure, une deuxième impression peut être réalisée sur la face verso de la sous-structure et lors de l'observation en transvision au travers de la fenêtre précitée, un motif complémentaire peut apparaître par effet de moiré entre les première et deuxième impressions.

Le ou les évidements présents sur au moins une couche fibreuse peuvent avoir chacun une surface comprise entre 0,1 et 10 cm². Le ou les évidements peuvent présenter une forme géométrique quelconque, notamment rectangulaire ou circulaire.

Au moins une couche fibreuse peut comporter des perforations, par exemple chacune d'une surface comprise entre 0,2 et 7 mm² pour un diamètre compris par exemple entre 0,5 et 3 mm. De telles perforations peuvent être avantageuses en ce qu'elles permettent, lors de l'assemblage de la structure, à un adhésif, appartenant par exemple à la sous-structure, par exemple un matériau thermoplastique transparent, de diffuser à travers une ou plusieurs couches fibreuses et ainsi de solidariser plus efficacement l'ensemble de la structure.

Les perforations peuvent former un motif, tel qu'un motif alpha numérique et/ou un dessin et/ou un symbole, de façon à fournir une sécurisation supplémentaire de la structure.

Selon un exemple particulier de réalisation, au moins une couche fibreuse comporte un patch ou une bande au moins partiellement transparent(e) et au moins une zone dépourvue de fibres située en regard du patch ou de la bande. La bande ou le patch peut comporter une matière plastique transparente, et comporter le cas échéant un ou plusieurs éléments de sécurité tels que des impressions holographiques ou des cristaux liquides. Deux zones dépourvues de fibres peuvent être situées chacune sur une couche fibreuse, en regard l'une de l'autre, de façon à former une fenêtre traversante permettant de voir à travers la bande ou le patch.

Au moins une couche fibreuse peut comporter au moins une zone de sécurité dite « anti-grattage » lui assurant une protection contre les falsifications mécaniques. Cette zone comporte un ensemble de régions d'épaisseur réduite, de sorte que toute tentative d'altération de la surface de cette couche fibreuse conduit à percer cette dernière. Une telle zone de sécurité est décrite dans le brevet EP 1 252 389.

### Sous-structure

La sous-structure peut comporter une région translucide ou être translucide sur toute sa surface. La sous-structure peut comporter une région translucide et/ou diffusant la lumière ou être translucide et/ou diffusant la lumière sur toute sa surface.

On entend par « translucide » le fait que la sous-structure laisse passer assez de lumière pour voir à travers la structure. On entend par « diffusant », le fait que la sous-structure diffuse de la lumière du fait de sa nature et de son épaisseur. Plus particulièrement, selon l'indice de réfraction de la sous-structure, celle-ci peut présenter un pouvoir diffusant de la lumière.

La région translucide peut s'étendre d'un bord à l'autre de la sous-structure.

La région translucide peut former un motif quelconque et être de forme par exemple rectangulaire, triangulaire, carrée, circulaire, ovale, polygonale, en étoile, entres autres.

La région translucide a de préférence la même épaisseur que la sous-structure.

La région translucide peut par exemple occuper plus de 50%, mieux 70% ou 80%, encore mieux 90%, du volume correspondant à la sous-structure.

La sous-structure peut comporter plusieurs régions translucides, par exemple plus de deux, trois ou quatre régions translucides. Ces régions translucides peuvent être disposées régulièrement ou non sur la sous-structure, par exemple avec des espacements identiques entre les régions, ou aléatoirement. Ces régions translucides peuvent former un motif, par exemple en étant disposées près les unes des autres.

Lorsque la sous-structure comporte deux régions translucides disjointes ou juxtaposées, ces dernières peuvent être réalisées différemment, par exemple avec des opacités différentes, pour créer des effets en transvision.

La sous-structure peut comporter aussi des charges minérales ou organiques, des bulles, des cavitations lui conférant un caractère diffusant.

La sous-structure peut avoir une épaisseur comprise entre 10 et 1000 µm, de préférence entre 50 et 1000 µm, de préférence entre 120 µm et 600 µm.

La sous-structure peut présenter un ou plusieurs évidements tels que décrits précédemment pour la ou les couches fibreuses.

La sous-structure peut être monocouche ou faite d'un assemblage de deux ou plusieurs couches, par exemple de deux, trois ou quatre couches, notamment fibreuses et/ou polymériques. Les couches peuvent être constituées de matériaux identiques ou différents, par exemple tels que ceux cités ci-après pour la sous-structure.

La sous-structure peut comporter une ou plusieurs couches assemblées à l'aide d'une ou plusieurs couches adhésives, par exemple telles que définies ci-après, ou bien encore sans adhésif, par fusion ou par soudure.

La sous-structure peut être un film plastique transparent recouvert d'un matériau ayant un haut pouvoir diffusant, par exemple des nanoparticules.

L'antenne associée au dispositif à microcircuit intégré peut être située entre deux couches constitutives de la sous-structure, étant par exemple collée sur une face d'une des couches.

L'épaisseur et la nature des couches de la sous-structure sont avantageusement choisies de façon à ce que la sous-structure, en particulier dans la région translucide, présente les propriétés de non opacité et de diffusion souhaitées, de manière à empêcher une combinaison des filigranes ou pseudo-filigranes des couches fibreuses lors d'une observation en lumière transmise de la structure.

La sous-structure peut comporter une couche d'un matériau thermoplastique, par exemple de polyéthylène (PE), de polychlorure de vinyle (PVC), de polyéthylène téréphtalate (PET), de polycarbonate (PC), de polyester carbonate (PEC), de polyéthylène téréphtalate glycol (PETG) ou d'acrylonitrile butadiène styrène (ABS), par exemple sous forme d'un film ou d'une couche extrudée.

La sous-structure peut encore comporter ou être constituée par une couche fibreuse, notamment un papier, par exemple un papier calque.

La sous-structure peut être composite et comporter au moins une couche polymère et une couche fibreuse, chaque couche étant par exemple choisie(s) parmi les matériaux mentionnés précédemment.

La sous-structure peut être du type PAPERLAM^{®} commercialisé par la société AROWIGGINS.

La sous-structure peut s'étendre sur toute la surface du ou des filigranes ou pseudo-filigranes.

La sous-structure peut s'étendre au niveau d'une partie de la structure, de préférence d'un bord à l'autre de la structure, dans une zone en regard du ou des filigranes ou pseudo-filigranes, par exemple de façon à former une bande. Les dimensions de la sous-structure peuvent correspondre à celles de la couverture d'un passeport par exemple, c'est-à-dire aux deux volets. Alternativement, elles correspondent aux dimensions d'un seul volet.

La sous-structure peut ne s'étendre que sur une partie de la surface du ou des filigranes ou pseudo-filigranes, une partie du ou des filigranes ou pseudo-filigranes n'étant ainsi visible que depuis une face de la structure alors que la partie non recouverte par la sous-structure est visible de part et d'autre de la structure en lumière transmise.

La sous-structure peut également être constituée d'une couche fibreuse durant la formation de laquelle on a inséré une bande constituant la région translucide, par exemple un film plastique transparent:

### Couche(s) adhésive(s)

La structure peut comporter au moins une couche adhésive, par exemple entre une couche fibreuse et la sous-structure.

En particulier, la structure peut comporter deux couches adhésives de part et d'autres de la sous-structure.

Les couches adhésives peuvent être de nature différente.

Au moins une couche adhésive peut comporter une polyoléfine, par exemple du polyéthylène.

Au moins une couche adhésive peut comporter un éthylène vinyle acétate.

De façon plus générale, au moins une couche adhésive peut comporter un matériau tel que mentionné plus haut pour la sous-structure.

Au moins une couche adhésive peut comporter un agent réticulant. Ce mode de réalisation peut par exemple permettre de renforcer l'adhésion entre les différentes couches. En particulier, l'agent réticulant de la couche adhésive peut être réticulable sous l'action d'un rayonnement, notamment un rayonnement ultra-violet.

### Assemblage de la ou des couches fibreuses avec la sous-structure

La ou les couches fibreuses peuvent être assemblées à la sous-structure de diverses manières, par exemple par le biais d'une ou plusieurs couches adhésives ou sans couche adhésive, par exemple par fusion ou soudure.

La ou les couches adhésives peuvent être continues, c'est-à-dire réparties uniformément sur toute la surface de la ou des couches fibreuses ou de la sous-structure.

La ou les couches adhésives peuvent au contraire être discontinues, notamment selon un motif et en particulier elles peuvent être appliquées par héliogravure ou par sérigraphie.

La ou les couches fibreuses peuvent donc être liées, notamment par collage, partiellement ou totalement à la sous-structure. En particulier, la ou les couches adhésives peuvent être appliquées partiellement ou totalement sur la ou les couches fibreuses, ou sur la sous-structure.

La sous-structure peut présenter sur au moins une de ses faces une couche polymère, par exemple un polycarbonate, pouvant permettre son scellage direct à chaud et sous pression sur la ou les couches fibreuses.

La sous-structure peut encore présenter sur au moins l'une de ses faces une couche polymère enduite d'un adhésif, par exemple une couche en polyéthylène téréphtalate enduite d'une couche d'éthylène vinyle acétate, permettant son scellage direct à froid ou à chaud, avec ou sans pression sur la ou les couches fibreuses.

La ou les couches fibreuses peuvent présenter sur leurs faces en regard avec la sous-structure, un revêtement de surface permettant leur scellage direct à chaud et sous pression sur la sous-structure. Par exemple, la ou les couches fibreuses peuvent comporter un substrat en papier imprégné de latex thermoscellant.

La ou les couches fibreuses peuvent présenter sur leurs faces en regard avec la sous-structure, une couche adhésive permettant leur scellage direct à froid ou à chaud, avec ou sans pression, sur la sous-structure. La ou les couches adhésives présentes sur la ou les couches fibreuses peuvent correspondre à des adhésifs liquides préalablement enduits à froid ou à chaud sur la ou les faces de la ou des couches fibreuses en regard avec la sous-structure.

Dans un autre exemple de réalisation, une ou plusieurs couches adhésives, de préférence non opaques et diffusantes optiquement, sont utilisées pour assembler la ou les couches fibreuses avec la sous-structure. La ou les couches adhésives peuvent par exemple correspondre à un ou plusieurs films sensibles à la pression ou thermoplastique.

La sous-structure peut encore comporter une ou plusieurs ouvertures ou perforations, de préférence non superposées au dispositif électronique et/ou à une antenne éventuelle, afin de permettre à la ou aux couches adhésives utilisées pour assembler la ou les couches fibreuses avec la sous-structure, de se mélanger et ainsi d'assurer une meilleure fixation de la sous-structure avec la ou les couches fibreuses.

Au moins une couche adhésive peut comporter un ou plusieurs éléments de sécurité tels que décrits précédemment.

L'assemblage de la sous-structure avec la ou les couches fibreuses peut avoir lieu avant, pendant ou après la fixation de la structure au support du document à volets.

Au moins une couche fibreuse et/ou la sous-structure peut être personnalisée, notamment à l'aide d'impressions et/ou de données enregistrées dans un dispositif à microcircuit intégré, avant, pendant ou après la fixation de la structure au support du document à volets.

Les éventuelles personnalisations de la ou des couche(s) fibreuse(s) peuvent être protégées, en particulier par un film transparent sécurisé ou non.

Ledit film peut être un film épais à base de PET ou de PE, notamment pour permettre une lamination à chaud sur la couche fibreuse, ou un film adhésif. De tels films sont notamment commercialisés par les sociétés Fasver ou Hologramm Industries.

La sous structure peut également être insérée entre les deux couches fibreuses sur une machine à papier lors de la formation des couches fibreuses.

### Structure

La structure selon l'invention peut présenter une épaisseur finale comprise entre 100 et 1000 µm, de préférence entre 150 et 500 µm.

La structure peut avoir une épaisseur constante. En variante, la structure peut avoir une épaisseur variable, notamment plus élevée en partie centrale que sur les bords de la structure.

Le document à volets peut être un document d'identité, notamment une carte d'identité ou, de préférence un passeport, un moyen de paiement, notamment un bon d'achat ou un voucher, un ticket d'accès à des manifestations culturelles ou sportives, un certificat d'authenticité.

### Procédé de fabrication du document à volets

L'invention a encore pour l'objet, selon un autre de ses aspects, un procédé de fabrication d'un document à volets tel que défini précédemment, comportant les étapes consistant à :
- former au moins un filigrane ou pseudo-filigrane sur une couche fibreuse d'une feuille intérieure du document à volets,
- superposer au moins partiellement une sous-structure comportant une région translucide audit au moins un filigrane ou pseudo-filigrane porté par ladite couche fibreuse au niveau de ladite zone translucide,
- éventuellement, assembler, notamment de façon permanente, ensemble la sous-structure et la couche fibreuse.

La feuille intérieure peut être pliée et liée au support du document à volets, par exemple une couverture de passeport, au niveau de la ligne de pliage.

La feuille intérieure peut définir deux pages intérieures de part et d'autre de la ligne de pliage du document à volets, chaque page intérieure définissant une couche fibreuse portant au moins un filigrane ou pseudo-filigrane, de telle sorte que par pliage de la feuille intérieure au niveau de la ligne de pliage les filigranes ou pseudo-filigranes se superposent au moins partiellement.

Le document à volets peut encore comporter au moins deux feuilles intérieures distinctes, chaque feuille intérieure définissant une couche fibreuse portant au moins un filigrane ou pseudo-filigrane, les deux filigranes ou pseudo-filigranes étant situés d'un même côté de la ligne de pliage de telle sorte qu'ils se superposent au moins partiellement.

Le document à volets peut encore comporter une première feuille intérieure et une deuxième feuille intérieure, chaque feuille intérieure définissant deux pages intérieures de part et d'autre de la ligne de pliage et chaque page intérieure définissant une couche fibreuse comportant au moins un filigrane ou pseudo-filigrane, de telle sorte que les filigranes ou pseudo-filigranes des première et deuxième couches intérieures situées d'un même côté de la ligne de pliage se superposent au moins partiellement.

La région translucide de la sous-structure peut être superposée à la couche fibreuse dans une configuration de telle sorte qu'elle recouvre totalement ou partiellement le filigrane ou pseudo-filigrane.

Lorsque le document à volets comporte au moins deux feuilles intérieures comportant chacune un filigrane ou pseudo-filigrane, la région translucide de la sous-structure peut être superposée aux deux filigranes ou pseudo-filigranes, en étant placés entre les feuilles intérieures.

La sous-structure peut avoir des dimensions variables. En particulier, la sous-structure peut avoir une largeur égale à la largeur d'une page de la feuille intérieure, c'est-à-dire une largeur égale à la distance entre la ligne de pliage et le bord du document à volets.

La sous-structure peut encore avoir une largeur inférieure à la largeur d'une page de la feuille intérieure.

En variante encore, la sous-structure peut avoir une largeur supérieure à la largeur d'une page de la feuille intérieure.

Lorsque la largeur de la sous-structure est inférieure à la largeur d'une page de la feuille intérieure, cela peut permettre de laisser libre une zone d'assemblage des couches fibreuses entre elles dans le cas de deux feuilles intérieures.

La sous-structure peut encore avoir une largeur inférieure, égale ou supérieure à la largeur d'une page de la feuille intérieure, la sous-structure étant liée, notamment par collage, scellage ou couture, au support du document à volets au niveau de la ligne de pliage.

Le document à volets peut comporter une ou plusieurs feuilles intérieures fibreuses et/ou thermoplastiques.

Le document à volets peut par exemple comporter au moins deux feuilles thermoplastiques associées ou non avec une couche adhésive thermoscellante, entre lesquelles vient se placer la structure selon l'invention. La structure peut comporter ou non une ou plusieurs couches adhésives pour faciliter son assemblage avec les feuilles intérieures thermoplastiques.

L'invention pourra être mieux comprise à la lecture qui va suivre, de la description détaillée d'exemples non limitatifs de mise en oeuvre de celle-ci, et à l'examen des figures du dessin annexé, schématiques et partielles, sur lequel :
- les figures 1a à 1c représentent différents exemples de pliage de documents, la structure n'étant pas représentée sur ces figures,
- la figure 2 représente en coupe un exemple de structure selon l'invention,
- la figure 3 représente, en vue de face, la face recto de la structure de la figure 2,
- la figure 4 représente, en vue de face, la face verso de la structure de la figure 2,
- les figures 5 à 8 représentent d'autres exemples de structures selon l'invention,
- la figure 9 représente en coupe un autre exemple de structure selon l'invention,
- les figures 10 et 11 représentent respectivement, en vue de face, les faces recto et verso de la structure de la figure 9,
- la figure 12 représente en coupe un autre exemple de structure selon l'invention,
- la figure 13 représente, en vue de face, la sous-structure de la structure de la figure 12,
- les figures 14 à 19 représentent, en coupe, des exemples de documents à volets selon l'invention,
- les figures 20 à 23 représentent, en vu de face, d'autres exemples d'observation en lumière transmise de structures de documents à volets selon l'invention,
- la figure 24 représente, en coupe, un autre exemple de document à volets selon l'invention,
- les figures 25 et 26 représentent, de façon schématique et partielle, des exemples de reliure pour former deux feuilles intérieures d'un document à volets selon la figure 24 de l'invention,
- les figures 27 et 28 représentent, en coupe, d'autres exemples de documents à volets selon l'invention, et
- les figures 29 et 30 représente, en coupe, respectivement avant et après assemblage de la structure un autre exemple de document à volets selon l'invention.

Sur le dessin, les proportions entre les différents éléments représentés n'ont pas toujours été respectées dans un souci de clarté.

On a représenté sur la figure 2 un exemple de structure 1 pouvant être assemblé au support d'un document à volets conforme à l'invention.

La structure 1 comporte deux couches fibreuses 2a et 2b entre lesquelles est située une sous-structure 3 formée d'une couche intercalaire en polymère sur laquelle est placé un dispositif à microcircuit intégré sans contact 4 et une antenne 5. La sous-structure 3 est dans cet exemple entièrement translucide.

La structure 1 comporte encore une couche adhésive 7a placée entre la sous-structure 3 et la couche fibreuse 2a, et une autre couche adhésive 7b placée entre la sous-structure 3 et la couche fibreuse 2b.

La structure 1 présente une épaisseur plus élevée en partie centrale, due à l'épaisseur de l'ensemble formé par les différentes couches superposées, qu'au niveau des bords de la structure 1.

Les couches adhésives 7a et 7b sont dans cet exemple sous la forme de films en polyéthylène thermoplastique, laminables à chaud. La couche de polyéthylène 7a permet la compensation partielle ou totale du dispositif à microcircuit intégré 4, la couche de polyéthylène thermoplastique fluant de part et d'autre du dispositif à microcircuit intégré 4 lors de la lamination.

La sous-structure 3 est dans cet exemple monocouche et se présente sous la forme d'un film de polyéthylène téréphtalate transparent d'au moins 100 µm d'épaisseur.

La sous-structure 3 porte sur l'une de ses faces le dispositif à microcircuit intégré 4 qui peut se présenter sous la forme d'une puce commercialisée par la société PHILIPS sous la référence MIFARE^{®}.

Le dispositif à microcircuit intégré 4 est connecté à une antenne 5, par exemple une antenne en cuivre gravée sur l'une des faces de la sous-structure 3.

Les deux couches fibreuses 2a et 2b ont par exemple un grammage égal à 90 g/m².

La couche fibreuse 2a comporte un filigrane ou pseudo-filigrane 8a, par exemple sous la forme d'un damier comme illustré, et la couche fibreuse 2b comporte un filigrane ou pseudo-filigrane 8b, par exemple sous la forme de l'association d'une cardioïde et d'une néphroïde.

Chacun des filigranes ou pseudo-filigranes 8a et 8b n'est visible que d'un côté de la structure 1. En particulier, le filigrane ou pseudo-filigrane 8a n'est visible que du côté recto de la structure 1 où figurent la couche fibreuse 2a, et le filigrane ou pseudo-filigrane 8b n'est visible que du côté verso de la structure 1 où figure la couche fibreuse 2b.

La figure 3 représente, en vue de face, la face recto de la structure 1 de la figure 1.

Sur cette figure, on peut voir que lorsque la structure 1 est éclairée de son côté verso, on observe uniquement le filigrane ou pseudo-filigrane 8a du côté recto de la structure 1.

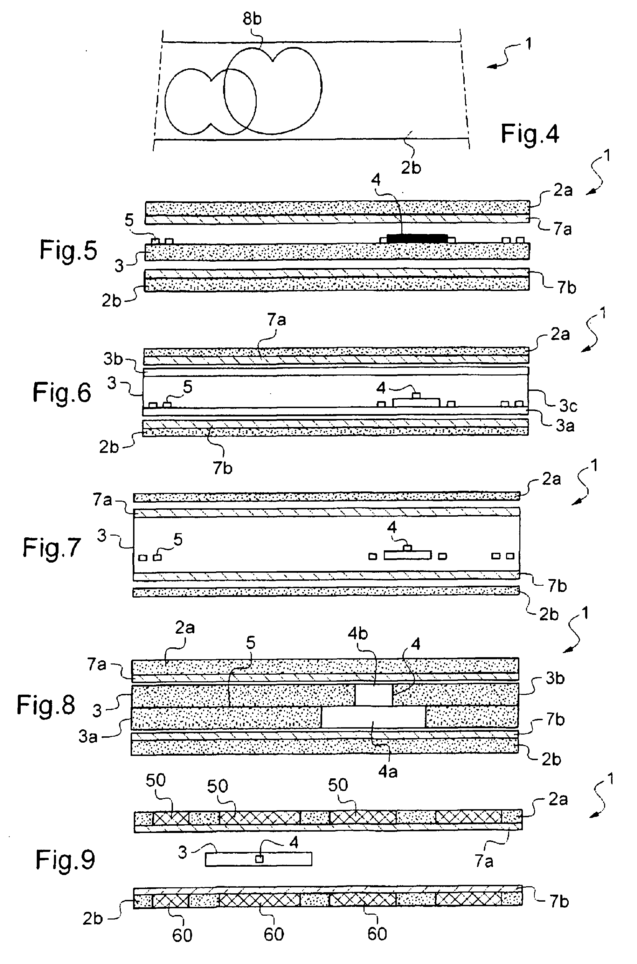

La figure 4 représente, en vue de face, la face verso de la structure 1 de la figure 1.

Sur cette figure, on peut voir que lorsqu'on éclaire la face recto de la structure 1, on peut voir uniquement le filigrane ou pseudo-filigrane 8b du côté verso de la structure 1.

On a représenté sur la figure 5 un autre exemple de structure 1 selon l'invention.

Dans cet exemple, la structure 1 comporte deux couches fibreuses 2a et 2b par exemple identiques à celles de l'exemple de la figure 1.

La structure 1 comporte en outre une sous-structure 3 comportant une couche intercalaire fibreuse translucide, sur l'une des faces de laquelle figure un dispositif à microcircuit intégré sans contact 4 et une antenne 5. La sous-structure 3 est avantageusement entièrement translucide.

La sous-structure 3 est par exemple en papier calque et a par exemple un grammage égal à 65 g/m².

Le dispositif à circuit intégré 4 est par exemple une puce du type « flip chip » connectée à une antenne 5, par exemple à base d'argent et sérigraphiée.

Chacune des couches fibreuses 2a et 2b comporte en outre respectivement une couche adhésive 7a et 7b, par exemple sous la forme d'un adhésif sensible à la pression, préalablement enduit à 25 g/m² par exemple, sur les faces intérieures des couches fibreuses 2a et 2b.

La figure 6 représente un autre exemple de structure 1 selon l'invention.

La structure 1 comporte deux couches fibreuses 2a et 2b par exemple identiques à celle de l'exemple de la figure 1. Les deux couches fibreuses 2a et 2b sont enduites sur leur face intérieure de deux couches adhésives 7a et 7b permettant leur scellage ultérieur sur la sous-structure 3.

La structure 1 comporte en outre une sous-structure 3 constituée de trois couches intercalaires 3a, 3b et 3c. La sous-structure 3 est dans cet exemple entièrement translucide.

La couche 3a est par exemple un film de polyéthylène téréphtalate transparent sur l'une des faces duquel est disposé le dispositif à microcircuit intégré 4 et l'antenne 5.

Le dispositif à microcircuit intégré 4 est par exemple une puce commercialisée par la société PHILIPS sous la référence MIFARE^{®}, connectée à l'antenne 5 qui est par exemple une antenne en cuivre gravé.

La couche 3b est par exemple un film de polyéthylène téréphtalate transparent sur lequel est enduite la couche 3c, laquelle est par exemple une couche en polyéthylène et éthylène vinyle acétate thermoplastique transparente. La couche 3c présente une épaisseur supérieure ou égale à celle du dispositif à microcircuit intégré 4, de manière à compenser l'épaisseur de ce dispositif.

La figure 7 représente un autre exemple de structure 1 selon l'invention.

La structure 1 comporte deux couches fibreuses 2a et 2b, ayant par exemple un grammage de 65 g/m² et une épaisseur égale à 70 µm.

La structure 1 comporte en outre une sous-structure 3 pouvant être constituée de plusieurs couches transparentes en polyéthylène téréphtalate et d'éthylène vinyle acétate (non représentées), dont certaines présentent au moins un évidement permettant d'incorporer un dispositif à microcircuit intégré 4 sous forme d'une puce module connectée à une antenne 5. La sous-structure 3 est avantageusement entièrement translucide.

Deux couches adhésives 7a et 7b sont présentes également de part et d'autre de la sous-structure 3 de manière à assure une cohésion avec les couches fibreuses 2a et 2b. Les couches adhésives 7a et 7b sont par exemple des couches thermoscellantes en éthylène vinyle acétate permettant la lamination directe de la sous-structure 3 entre les deux couches fibreuses 2a et 2b.

La figure 8 représente un autre exemple de structure 1 selon l'invention.

La structure 1 comporte deux couches fibreuses 2a et 2b, par exemple identiques aux couches fibreuses 2a et 2b de l'exemple de la figure 7.

Les couches fibreuses 2a et 2b de la structure 1 sont pré-enduites respectivement sur leur face intérieure avec des couches adhésives 7a et 7b, activables à chaud et thermodurcissables, appliquées sous forme d'adhésifs liquide à base de polyuréthane mélangé à un isocyanate bloqué.

La structure 1 comporte en outre une sous-structure 3 ayant par exemple une épaisseur de 260 µm. La sous-structure est par exemple ici entièrement translucide.

La sous-structure 3 comporte une couche 3a en papier, par exemple d'épaisseur égale à 130 µm, comportant sur l'une de ses faces une antenne filaire 5 en cuivre, fixée par exemple par ultrasons, et un évidement dans lequel est logé partiellement un dispositif à microcircuit intégré 4 sans contact.

La sous-structure 3 comporte également une couche 3b en papier, ayant par exemple une épaisseur égale à 130 µm, comportant également un évidement en regard de l'évidement de la couche 3a, dans lequel est logé au moins partiellement le dispositif à microcircuit intégré 4.

Le dispositif à microcircuit intégré 4 est par exemple une puce module du type MOB 6, commercialisée par la société PHILIPS.

Dans tous les exemples des figures 5 à 8, les couches fibreuses 2a et 2b de la structure 1 comportent un ou plusieurs filigranes ou pseudo-filigranes, par exemple ceux décrits dans l'exemple de la figure 2.

La figure 9 représente un autre exemple de structure 1 selon l'invention.

Dans cet exemple, la structure 1 comporte deux couches fibreuses 2a et 2b enduites respectivement sur leur face intérieure de deux couches adhésives 7a et 7b.

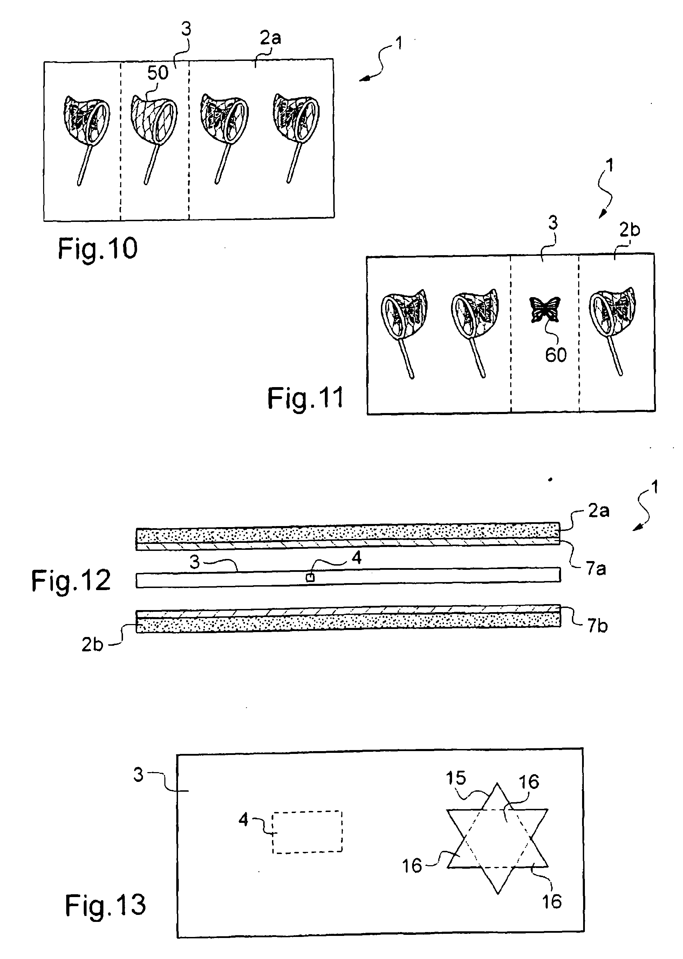

La couche fibreuses 2a comporte plusieurs filigranes 50 identiques, comme on peut le voir sur la figure 10, représentant la face recto de la structure 1 de la figure 9.

La couche fibreuse 2b comporte elle aussi plusieurs filigranes 60 identiques, comme on peut le voir sur la figure 11, représentant la face verso de la structure 1 de la figure 9.

Une sous-structure 3 sous la forme d'une bande entièrement translucide et diffusant la lumière, monocouche ou non, est placée entre les couches fibreuses 2a et 2b enduites des couches adhésives 7a et 7b. La sous-structure 3 a avantageusement des dimensions, notamment une largeur, inférieures à celles des couches fibreuses 2a et 2b. La sous-structure 3 s'étend d'un bord à l'autre de la structure 1, dans le sens de la largeur, comme on peut le voir sur les figures 10 et 11.

Un dispositif à microcircuit intégré 4 sous la forme d'une puce du type AOB (« Antenna On Board ») avec une antenne embarquée est incorporée dans la sous-structure 3.

Avantageusement, au moins une partie, mieux la totalité, d'un filigrane 50 de la couche fibreuse 2a et au moins une partie, mieux la totalité, d'un filigrane 60 de la couche fibreuse 2b sont superposées à la sous-structure 3.

Lorsqu'on observe la face recto de la structure 1 au niveau de la sous-structure 3, comme représenté sur la figure 10, seul le filigrane 50 de la couche fibreuse 2a est visible, et non le filigrane 60 de la couche fibreuse 2b.

Lorsqu'on observe la face verso de la structure 1 au niveau de la sous-structure 3, comme représenté sur la figure 11, seul le filigrane 60 de la couche fibreuse 2b est visible, et non le filigrane 50 de la couche fibreuse 2a.

Avantageusement, les filigranes 50 et 60 des couches fibreuses 2a et 2b, non superposés à la sous-structure 3, sont visibles à la fois du côté recto et du côté verso de la structure 1, comme on le voit sur les figures 10 et 11. De plus, ces filigranes 50 et 60 peuvent se combiner entre eux de manière à former un motif résultant de leur combinaison, représentant dans cet exemple un papillon enfermé dans le filet.

Ainsi dans cet exemple, la combinaison entre des filigranes des couches fibreuses 2a et 2b peut n'être par exemple possible qu'en dehors de la sous-structure 3.

On a représenté sur la figure 12 un autre exemple de structure 1 selon l'invention.

La structure 1 comporte deux couches fibreuses 2a et 2b et deux couches adhésives 7a et 7b identiques à celles de la structure 1 de la figure 9.

Dans cet exemple en revanche, la structure 1 comporte une sous-structure 3 s'étendant d'un bord à l'autre de la structure 1, dans le sens de la longueur et de la largeur.

La sous-structure 3 comporte une région translucide 15, obtenue par exemple par la juxtaposition de plusieurs régions translucides 16 formant entre elles un motif, par exemple sous la forme d'une étoile.

Les couches fibreuses 2a et 2b peuvent comporter un ou plusieurs filigranes ou pseudo-filigranes, par exemple tels que ceux décrits précédemment, se superposant de préférence au moins partiellement au niveau de région translucide de la sous-structure 3.

Comme il a été décrit pour la structure de la figure 9, illustrée également par les figures 10 et 11, chaque partie d'un filigrane ou pseudo-filigrane se situant au niveau de la région translucide 15 n'est visible que du côté de la structure 1 où figure la couche fibreuse qui le porte. En dehors de la région translucide 15, le ou les filigranes ou pseudo-filigranes de la couche fibreuse 2a peuvent par exemple se combiner avec le ou les filigranes ou pseudo-filigranes de la couche fibreuse 2b.

La figure 13 représente en vue de face la sous-structure 3 de la figure 12, sur laquelle on peut voire le motif formé par la région translucide 15.

Dans tous les exemples de réalisation décrits précédemment, le ou les dispositifs à microcircuit intégré 4 peuvent comporter ou être associés avec un ou plusieurs dispositifs électroniques sous la forme de détecteurs configurés pour détecter un changement d'au moins une grandeur physicochimique, notamment une grandeur physicochimique caractéristique d'une couche comportant le dispositif à microcircuit intégré concerné, par exemple la sous-structure 3. De la sorte, il peut être possible de signaler toute tentative d'atteinte à l'intégrité physique de la structure suite à la détection d'un changement de la grandeur physicochimique.

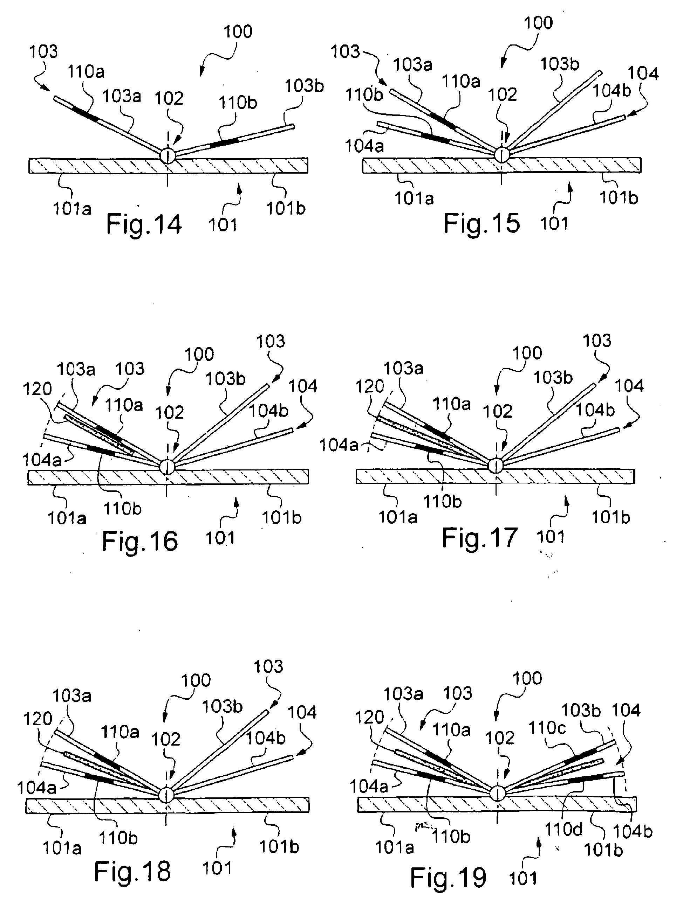

On a représenté sur les figures 14 à 19, en coupe et de façon schématique et partielle, des exemples de documents à volets 100 conforme à l'invention.

La figure 14 représente un document à volets 100 comportant un support 101 définissant deux volets 101a et 101b reliés par une ligne de pliage 102.

Le document à volets 100 comporte dan cet exemple une feuille intérieure 103 qui présente deux pages intérieures 103a et 103b de part et d'autre de la ligne de pliage 102.

La page intérieure 103a porte un premier filigrane ou pseudo-filigrane 110a, et la page intérieure 103b porte un second filigrane ou pseudo-filigrane 110b. Ainsi, les deux filigranes ou pseudo-filigranes 110a et 110b sont portés par une seule et même feuille intérieure 103.

Le procédé de fabrication du document à volets 100 selon l'invention comporte notamment l'étape consistant à superposer au moins partiellement une sous-structure (non représentée sur la figure 14) aux filigranes ou pseudo-filigranes 110a et 110b en plaçant la sous-structure entre les pages intérieures 103a et 103b de la feuille intérieure 103.

On a représenté sur la figure 15 un autre exemple de documents à volets 100 conforme à l'invention.

Dans cet exemple, le document à volets 100 comporte deux feuilles intérieures 103 et 104 liées entre elles au niveau de la ligne de pliage 102.

Chaque feuille intérieure 103 et 104 comporte une page intérieure 103a et 104a, portant chacune un filigrane ou pseudo-filigrane 110a et 110b, les deux pages intérieures 103a et 104a figurant d'un même côté de la ligne de pliage 102. De la sorte, les filigranes ou pseudo-filigranes 110a et 110b se superposent au moins partiellement. Ainsi, les filigranes ou pseudo-filigranes 110a et 110b sont portés par deux feuilles intérieures 103 et 104 du document à volets 100 distinctes.

Le procédé de fabrication du document à volets 100 selon l'invention comporte alors l'étape consistant à superposer une sous-structure (non représentée sur la figure 15) aux filigranes ou pseudo-filigranes 110a et 110b, en plaçant la sous-structure entre les pages intérieures 103a et 104a des feuilles intérieures 103 et 104.

On a représenté sur les figures 16 à 17 différents exemples de positionnement d'une sous-structure 120 entre les filigranes ou pseudo-filigranes 110a et 110b. Ces exemples de positionnement sont illustrés avec une configuration du document à volets 100 semblable à celle représentée sur la figure 15 mais sont également applicable à la configuration représentée à la figure 14.

Sur la figure 16, la sous-structure 120 présente une largeur inférieure à la largeur des pages intérieures 103a et 104a de telle sorte que le document à volets 100 présente des zones de part et d'autre de la sous-structure 120 pouvant éventuellement permettre un assemblage des couches fibreuses constituées par les pages intérieures 103a et 104a entre elles. Dans cet exemple, la sous-structure 120 peut être liée aux couches fibreuses constituées par les pages intérieures 103a et 104a, ou en variante, être libre, c'est-à-dire non liée au support 101 et aux couches fibreuses constituées par les pages intérieures 103a et 104a.

Sur la figure 17, la sous-structure 120 présente une largeur supérieure aux largeurs des pages intérieures 103a et 104a, et est positionnée entre les pages intérieures 103a et 104a de telle sorte que l'extrémité extérieure de la sous-structure 120 soit exactement superposée aux extrémités extérieures des pages intérieures 103a et 104a, et que l'extrémité intérieure de la sous-structure 120, c'est-à-dire l'extrémité se situant au niveau de la ligne de pliage 102, soit fixée au support 101 au niveau de la ligne de pliage 102, par exemple par collage ou couture.

Sur la figure 18, la sous-structure est également fixée par son extrémité intérieure au support 101, tout comme pour l'exemple de la figure 17.

En revanche, l'extrémité extérieure de la sous-structure 120 ne se superpose pas aux extrémités extérieures des pages intérieures 103a et 104a. De la sorte, il est par exemple possible d'assembler les couches fibreuses constituées par les pages intérieures 103a et 104a entre elles.

On a représenté sur la figure 19, un exemple de document à volets 100 conforme à l'invention.

Dans cet exemple, le document à volets 100 comporte deux feuilles intérieures 103 et 104.

La feuille intérieure 103 comporte une pages intérieure 103a comportant un premier filigrane ou pseudo-filigrane 110a et une page intérieure 103b portant un deuxième filigrane ou pseudo-filigrane 110c. Il en est de même pour la feuille intérieure 104 qui comporte une page intérieure 104a portant un premier filigrane ou pseudo-filigrane 110b et une page intérieure 104b qui porte un deuxième filigrane ou pseudo-filigrane 110d.

Les filigranes ou pseudo-filigranes 110a à 110d sont formés sur les pages intérieures 103a, 103b, 104a et 104b de telle sorte que les filigranes ou pseudo-filigranes 110a et 110b, respectivement les filigranes ou pseudo-filigranes 110c et 110d, se superposent au moins partiellement.

Le document à volets 100 comporte de plus une sous-structure 120, constituée par un assemblage de deux sous-structures distinctes ou constituées d'une seule sous-structure pliée au niveau de la ligne de pliage 102. La sous-structure 120 est placée entre les feuilles intérieures 103 et 104, de telle sorte à se superposer au moins partiellement à la fois aux filigranes ou pseudo-filigranes 110a et 110b, et aux filigranes ou pseudo-filigranes 110c et 110d.

La feuille intérieure 104 peut par exemple être assemblée en premier au support 101, puis la sous-structure 120 peut être assemblée à son tour au support 101 au niveau de la ligne de pliage 102, et enfin la feuille intérieure 103 peut être assemblée en dernier au support 101 au niveau de la ligne de pliage 102.

Dans cet exemple, la sous-structure 120 présente une largeur inférieure à la largeur des feuilles intérieures 103 et 104 et à la largeur du support 101 de sorte que le document à volets 100 présente des zones au niveau des bords des feuilles intérieures 103 et 104 qui permettent, le cas échéant, d'assembler les couches fibreuses formées par les pages intérieures 103a, 103b, 104a et 104b entre elles.

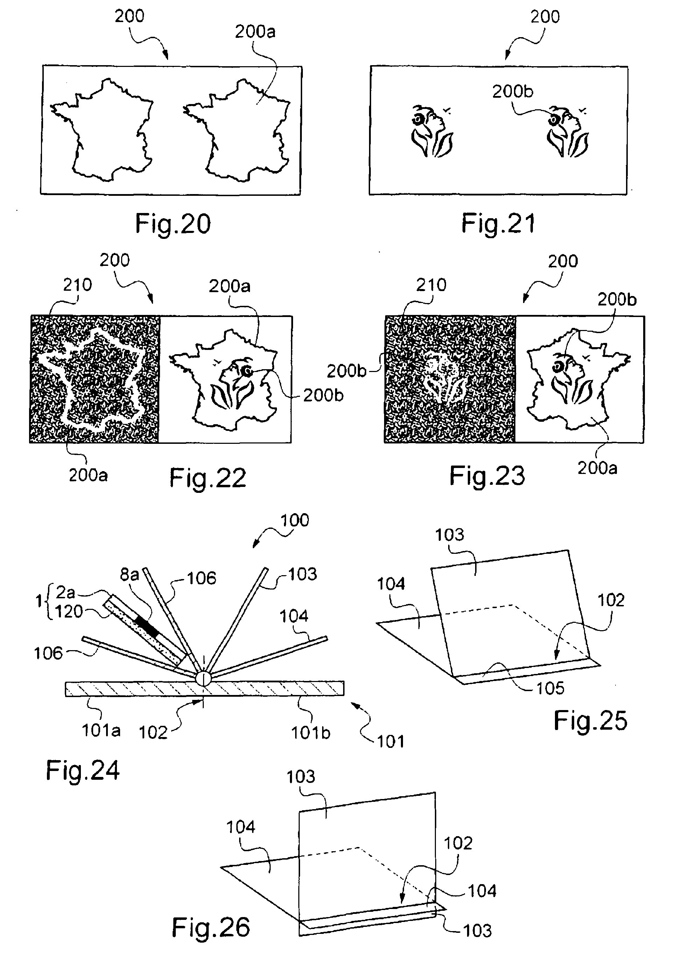

On a représenté sur les figures 20 à 23 d'autres exemples d'observations d'une structure 200 pouvant être incorporée à un document à volets conforme à l'invention.

Sur les figures 20 et 21, la structure 200 est telle qu'elle comporte deux couches fibreuses (non représentées) portant chacune respectivement des filigranes 200a et 200b. La structure 200 comporte de plus une sous-structure (non représentée) qui se superpose totalement aux filigranes 200a et 200b.

La figure 20 représente le côté recto de la structure 200 sur lequel on constate que l'on observe uniquement en lumière transmise les filigranes 200a portés par la couche fibreuse figurant sur le recto de la structure 200.

La figure 21 représente le côté verso de la structure 200 sur lequel on constate que l'on ne peut observer en lumière transmise que les filigranes 200b portés par la couche fibreuse figurant sur le côté verso de la structure 200.

Dans les figures 22 et 23, la sous-structure 210, matérialisée par une zone foncée sur les figures, ne se superpose qu'à une partie seulement des filigranes 200a et 200b de sorte que dans la partie de la structure 200 dépourvue de la sous-structure 210, les filigranes 200a et 200b se superposent l'un à l'autre par observation en lumière transmise.

On a représenté sur la figure 24, en coupe, un autre exemple de document à volets 100 selon l'invention.

Le document à volets 100 comporte un support 101 définissant deux volets 101 a et 101b reliés par une ligne de pliage 102.

Le document à volets 100 comporte une ou plusieurs feuilles intérieures 103 et 104, qui peuvent être telles qui décrites précédemment, par exemple fibreuses et/ou polymères, et deux feuilles intérieures 106 comportant chacune une couche thermoplastique seule ou une couche thermoplastique associée à une couche adhésive thermoscellante.

Entre les feuilles intérieures 106 vient se placer une structure 1 selon l'invention comportant une sous-structure 120 et une couche fibreuse 2a sur laquelle figure un filigrane ou pseudo-filigrane 8a. La structure 1 peut comporter ou non une ou plusieurs couches adhésives pour faciliter l'assemblage avec les feuilles intérieures 106.

La structure 1 est assemblée, notamment fixée, entre les feuilles intérieures 106 thermoplastiques lors du scellage des feuilles intérieures 106 ensemble.

On a représenté sur les figures 25 et 26 deux exemples de reliure pour former deux feuilles intérieures d'un document à volets selon l'invention.

Dans l'exemple de la figure 25, deux feuilles 103 et 104 sont reliées par scellage selon une bande 105 afin de former deux feuilles intérieures pour un document à volets selon la figure 24 de l'invention.

Dans l'exemple de la figure 26, deux feuilles 103 et 104 sont pliées et reliées entre elles au niveau d'une ligne de pliage 102 par l'une des méthodes décrites précédemment afin de former deux feuilles intérieures pour un document à volets selon la figure 24 de l'invention.

Les feuilles intérieures ainsi formées peuvent être reliées à la ligne de pliage de la couverture d'un document à volets selon l'invention.

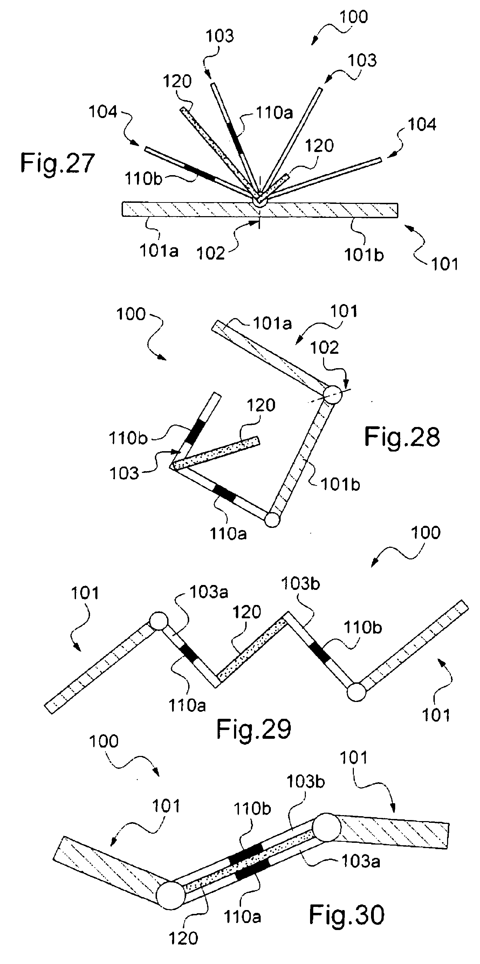

On a représenté sur les figures 27 à 30 des variantes de réalisation de documents à volets 100 selon l'invention.

Sur la figure 27, le document à volets est par exemple réalisé de façon semblable au document à volets 100 décrit à la figure 19. Cependant, la sous-structure 120 s'étend partiellement par une de ses extrémités entre deux parties des feuilles intérieures 103 et 104 dépourvues de filigrane ou pseudo-filigrane.

Les figures 28 à 30 illustrent la possibilité pour le document à volets de présenter une configuration telle que décrite en référence aux figures 1a à 1c.

Sur la figure 28, la structure est assemblée par l'extrémité d'une partie de la couche fibreuse 103 à une extrémité du support 101. Après assemblage des couches fibreuses portant les filigranes ou pseudo-filigranes 110a et 110b avec la sous-structure 120 pour former la structure, le document à volets peut présenter une configuration semblable à celle de la figure 1a.

Les figures 29 et 30 représentent, respectivement avant et après assemblage de la structure, une autre possibilité de réalisation d'un document à volets 100 selon l'invention.

Dans cet exemple, les extrémités des couches fibreuses portant les filigranes ou pseudo-filigranes 10a et 110b sont reliées à deux extrémités distinctes du support 101, de sorte que la structure est située entre deux parties du support 101. Le document à volets présente alors une fois la structure assemblée une configuration semblable à celle de la figure 1a, le volet central étant constitué par la structure.

L'invention n'est pas limitée aux modes de réalisation précédemment décrits. En particulier, la sous-structure peut être liée au support et/ou à la ou aux couches fibreuses de la structure, ou en variante, être libre, c'est-à-dire liée au support et/ou à la ou aux couches fibreuses de la structure que par la zone de pliage. Dans ce dernier cas, la sous-structure est mobile par rapport aux couches fibreuses selon un axe de rotation correspondant à la ligne de pliage. L'authentification du document à volets peut par exemple se faire volontairement en maintenant ensemble la sous-structure et la couche fibreuse de manière superposée pour constater que le filigrane ou pseudo-filigrane n'est observable en lumière transmise à travers la structure, au niveau de la région translucide de la sous-structure, que de la face de la structure située du côté de la couche fibreuse. La sous-structure peut par exemple être insérée entre les couches fibreuses.

L'expression « comportant un » est synonyme de « comportant au moins un », sauf si le contraire est spécifié.

## Revendications

1. Document à volets (100) comportant :
- un support (101) définissant au moins deux volets (101a, 101b) reliés par au moins une ligne de pliage (102),
- une structure (1, 200) liée au support (101), notamment au niveau de la ligne de pliage (102), avec une possibilité de déplacement relativement à celui-ci et s'étendant au moins partiellement entre les deux volets (101a, 101b) lorsque le document à volets est plié, la structure comportant :
- une couche fibreuse (2a, 2b, 103a, 103b, 104a, 104b),
- une sous-structure (3, 120, 210) comportant une région translucide, **caractérisé en ce que** le document comporte
- un filigrane ou pseudo-filigrane (8a, 8b, 50, 60, 110a-110d, 210a, 210b) portés par la couche fibreuse et se superposant au moins partiellement à la région translucide de la sous-structure, de telle sorte que le filigrane ou pseudo-filigrane ne soit observable en lumière transmise à travers la structure, au niveau de la région translucide de la sous-structure, que de la face de la structure située du côté de la couche fibreuse.

2. Document selon la revendication 1, 1a structure (1, 200) comportant un dispositif à microcircuit intégré (4), notamment à communication sans contact et/ou avec contact.

3. Document selon l'une des revendications 1 et 2, la structure comportant deux couches fibreuses, la sous-structure étant située entre les couches fibreuses, les deux couches fibreuses comportant chacune un filigrane ou pseudo-filigrane observable en lumière transmise à travers la structure que de la face de la structure située du côté de la couche fibreuse qui le porte.

4. Document selon la revendication 3, lesdits filigranes étant partiellement superposés à la couche translucide, le filigrane dune couche fibreuse comportant :
- une portion qui se combine visuellement avec une portion du filigrane ou pseudo-filigrane de l'autre couche fibreuse en dehors de la région translucide de la sous-structure, et
- une autre portion qui ne se combine visuellement avec aucune portion du filigrane ou pseudo-filigrane de l'autre couche fibreuse au niveau de la région translucide de la sous-structure.

5. Document selon la revendication 3, lesdits filigranes étant partiellement superposés à la couche translucide, le filigrane ou pseudo-filigrane de chaque couche fibreuse n'étant visible au moins partiellement que sur la face de la couche fibreuse le comportant, notamment au niveau de la région translucide de la sous-structure et étant visible au moins partiellement sur la face de la couche fibreuse ne le comportant pas, notamment en dehors de la région translucide de la sous-structure.

6. Document selon l'une des revendications précédentes, la sous-structure étant translucide et diffusant la lumière.

7. Document selon l'une quelconque des revendications précédentes, la sous-structure comportant au moins une couche polymère, notamment en polyéthylène (PE), en polychlorure de vinyle (PVC), en polyéthylène téréphtalate (PET), en polycarbonate (PC), en polyester carbonate (PEC), en polyéthylène téréphtalate glycol (PETG) ou en acrylonitrile butadiène styrène (ABS), notamment sous forme dun film ou dune couche extrudée.

8. Document selon l'une quelconque des revendications précédentes, le support (101) du document comportant un dispositif à microcircuit intégré et la sous-structure étant un élément de perturbation électromagnétique comportant des moyens d'atténuation, de perturbation ou de blocage du couplage électromagnétique entre le dispositif à microcircuit intégré, notamment sans contact, et un lecteur externe, de type matériau magnétique, matériau conducteur ou circuit résonateur.

9. Document selon l'une quelconque des revendications précédentes, la sous-structure n'étant liée au support et/ou à la ou aux couches fibreuses de la structure que par la ligne de pliage.

10. Procédé de fabrication d'un document à volets (100) selon l'une
quelconque des revendications précédentes, **caractérisé en ce que** il comporte les étapes consistant à:
- former au moins un filigrane ou pseudo-filigrane (8a, 8b, 50, 60, 110a-110d, 210a-210b) sur une couche fibreuse (2a, 2b, 103a, 103b; 104a, 104b) d'une feuille intérieure (103, 104) du document à volets,
- superposer au moins partiellement une sous-structure (3, 120, 210) comportant une région translucide audit au moins un filigrane ou pseudo-filigrane porté par ladite couche fibreuse au niveau de ladite zone translucide,
- éventuellement, assembler ensemble, notamment de façon permanente, la sous-structure et la couche fibreuse.

11. Procédé selon la revendication précédente, la feuille intérieure (103, 104) étant pliée et liée au support (101) du document à volets (100) au niveau de la ligne de pliage (102).

12. Procédé selon la revendication précédente, la feuille intérieure définissant deux pages intérieures (103a, 103b, 104a, 104b) de part et d'autre de la ligne de pliage (102) du document à volets, chaque page intérieure définissant une couche fibreuse portant au moins un filigrane ou pseudo-filigrane, de telle sorte que par pliage de la feuille intérieure au niveau de la ligne de pliage, les filigranes ou pseudo-filigranes se superposent au moins partiellement.

13. Procédé selon la revendication 10, le document à volets comportant au moins deux feuilles intérieures distinctes (103, 104), chaque feuille intérieure définissant une couche fibreuse portant au moins un filigrane ou pseudo-filigrane, les deux filigranes ou pseudo-filigranes étant situés d'un même côté de la ligne de pliage (102) de telle sorte qu'ils se superposent au moins partiellement.

14. Procédé selon la revendication précédente, le document à volets comportant une première feuille intérieure (103) et une deuxième feuille intérieure (104), chaque feuille intérieure définissant deux pages intérieures (103a, 103b, 104a, 104b) de part et d'autre de la ligne de pliage (102) et chaque page intérieure définissant une couche fibreuse comportant au moins un filigrane ou pseudo-filigrane, de telle sorte que les filigranes ou pseudo-filigranes des première et deuxième couches intérieures situées d'un même côté de la ligne de pliage (102) se superposent au moins partiellement.

15. Procédé selon l'une quelconque des revendications 10 à 13, la sous-structure étant liée, notamment par collage, scellage ou couture, au support du document à volets au niveau de la ligne de pliage.

## Patentansprüche

1. Klappdokument (100) mit
einem Träger (101), der wenigstens zwei Klappen (101a, 101b) definiert, die über wenigstens eine Knicklinie (102) verbunden sind,
einer Struktur (1, 200), die mit dem Träger (101) verbunden ist, insbesondere auf Höhe der Knicklinie (102), mit einer Möglichkeit relativ zu diesem verschoben zu werden, und die sich wenigstens teilweise zwischen den zwei Klappen (101a, 101b) ersteckt, wenn das Klappdokument geknickt ist, wobei die Struktur aufweist:
eine Fasmchicht (2a, 2b, 103a, 103b, 104a, 104b),
eine Unterstruktur (3, 120, 210) mit einer transluzenten Region,
**dadurch gekennzeichnet, dass** das Dokument aufweist:
ein Wasserzeichen oder Pseudo-Wasserzeichen (8a, 8b, 50, 60, 110a-110d, 210a, 210b), das durch die Fasmehicht getragen wird und sich wenigstens teilweise mit der transluzenten Region der Untersttuktur so überlagert, dass das Wasserzeichen oder Pseudo-Wasserzeichen in Licht, das durch die Struktur auf Höhe der transluzenten Region der Unterstruktur transmittiert wird, nur von der Seite, der Struktur beobachtbar ist die auf der Seite der Faserschicht liegt.

2. Dokument nach anspruch 1, wobei die Struktur (1, 200) eine integrierte Mikroschaltungsvorrichtung (4), insbesondere zur kontaktfreien und/oder kontaktbasierten Kommunikation, aufweist,

3. Dokumente nach einem der Ansprüche 1 und 2, wobei die Struktur zwei Faserschichten aufweist, die Untershuktur zwischen den Fasersclüchten angeordnet ist, und die zwei Faserschichten jeweils ein Wasserzeichen oder Pseudo-Wasserzeichen aufweisen, das in durch die Sftuktur transmittiertem Licht nur von der Seite der Struktur beobachtbar ist, die auf der Seite der Faserschicht liegt, die es trägt.

4. Dokument nach Anspmch 3, wobei die Wasserzeichen teilweise die transluzente Schicht überlagern, und das Wasserzeichen einer Faserschicht aufweist:
einen Abschnitt, der visuell mit einem Abschnitt des Wasserzeichens oder Pseudo-Wasserzeichens der anderen Fasenchicht außerhalb der transluzenten Region der Unterstruktur kombiniert ist, und
einen anderen Abschnitt, der visuell mit keinem Abschnitt des Wasserzeichens oder Pseudo-Wasserzeichens der anderen Faserschicht auf Höhe der transluzenten Region der Unterstruktur kombiniert ist.

5. Dokument nach Anspruch 3, wobei die Wasserzeichen teilweise die transluzente Schicht überlagern, und das Wasserzeichen oder Pseudo-Wasserzeichen jeder Faserschicht nur wenigstens teilweise nur auf der Seite der Faserschicht, die es trägt, sichtbar ist, insbesondere auf Höhe der transluzenten Region der Unterstruktur, und wenigstens teilweise auf der Seite der Faserschicht, die es nicht trägt, sichtbar ist, insbesondere außerhalb der transluzenten Region der Unterstuktur,

6. Dokument nach einen der vontehenden Ansprüche, wobei die Unterstruktur transluzent und nicht-streuend ist.

7. Dokument nach einem der vorstehenden Ansprüche, wobei die Unterstruktur wenigstens eine Polymerschicht, insbesondere aus Polyethylen (PE), aus Polyvinylchlorid (PVC), aus Polyethylenterephthalat (PET), aus Polycarbonat (PC), aus Polyesterearbonat (PEC), aus Polyethylentemphthalat-Glycol (PETG) oder aus Acrylnitril-Butadien-Styrol (ABS) aufweist, insbesondere in Form eines Fihns oder einer Extrusionsschicht.

8. Dokument nach der vorstehenden Ansprüche, wobei der Träger (101) des Dokuments eine integrierte Mikroschaltungsvorrichtung aufweist, und die Unterstruktur ein elektromagnetisches Störelement mit Dämpfungsmitteln zur Störung oder Blockierung der elektromagnetischen Kopplung zwischen der integrierten Mikroschaltungsvorrichtung, die insbesondere kontaktfiei ist, und einer externen Leseeinheit vom Magnetmaterialtyp, Leitungsmaterialtyp oder Resonsanzschaltungstyp ist.

9. Dokument nach einem der vorstehenden Ansprüche, wobei die Unterstruktur mit dem Träger und/oder der oder den Faserschichten der Struktur nur durch die Knicklinie verbunden ist.

10. Verfahren zur Herstellung eines Klappdokuments (100) gemäß einem der vorstehenden Amprüche, **dadurch gekennzeichnet, dass** Schritte ausgefübrt werden, in denen
wenigstem ein Wasserzeichen oder Pscudo-Wasserzeichen (8a, 8b, 50, 60 110a-110d, 210a-210b) auf einer Faserschicht (2a, 2b, 103a, 103b, 104a, 104b) eines Innenblatts (103, 104) des Klappdokuments gebildet wird,
wenigstens teilweise eine Unterstruktur (3, 120, 210) mit einer transluzenten Region auf das wenigstens eine Wasserzeichen oder Pseudo-Wasserzeichen überlagert wird, das von der Faserschicht auf Höhe der transluzenten Zone getragen wird,
eventuell die Unterstruktur und die Faserschicht zusammengesetzt werden, insbesondere in permanenter Weise.

11. Verfahren nach dem vorstehenden Ansprach, wobei das Innenblatt (103, 104) geknickt und mit dem Träger (101) des Klappdokuments (100) auf Höhe der Knicklinie (102) verbunden ist.

12. Verfahren nach dem vorstehenden Anspruch, wobei das Innenblatt zwei Innenseiten (103a, 103b, 104a, 104b) auf den beiden Seiten der Knicklinie (102) des Klappdokuments definiert, wobei jede Innenseite eine Faserschicht definiert, die wenigstens ein Wasserzeichen oder Pseudo-Wasserzeichm trägt, so dass durch Knicken des Innenblatts auf Höhe der Knicklinie die Wasserzeichen oder Pseudo-Wasserzeichen sich wenigstens teilweise überlagern.

13. Verfahren nach Anspruch 10, wobei das Klappdokument wenigstens zwei verschiedene Innenblätter (103, 104) aufweist, die jeweils eine Faserschicht mit wenigstens einem Wasserzeichen oder Pseudo-Wasserzeichen aufweisen, und die zwei Wasserzeichen oder Pseudo-Wasserzeichen auf der gleichen Seite der Knicklinie (102) angeordnet sind, so dass sie sich wenigstens teilweise überlagern.

14. Verfahren nach dem vorstehenden Anspruch, wobei das Klappdokument ein erstes Innenblatt (103) und ein zweites Innenblatt (104) aufweist, jedes Innenblatt zwei Innenseiten (103a, 103b, 104a, 104b) auf den beiden Seiten der Knicklinie (102) definiert und jede Innenseite eine Faserschicht mit wenigstens einem Wasserzeichen oder Pseudo-Wasserzeichen definiert, so dass die Wasserzeichen oder Pseudo-Wasserzeichen der ersten und der zweiten Innenschicht auf der gleichen Seite der Knicldinie (102) sich wenigstens teilweise überlagern.

15. Verfahren nach einem der Ansprüche 10 bis 13, wobei die Unterstruktur mit dem Träger des Klappdokuments auf Höhe der Knicklinie verbunden ist, insbesondere durch Verkleben, Versiegeln oder Nähen.

## Claims

1. A sectional document (100) comprising :
a support (101) defining at least two sections (101a, 101b) linked by at least one fold line (102),
a structure (1, 200) linked to the support and extending at least partially between the two sections (101a, 101b) when the sectional document is folded, the structure comprising:
a fibrous layer (2a, 2b, 103a, 104a, 104b),
a substructur (3, 120, 210) including a translucent region, **characterized in that** the document comprises :
a watermark or pseudo-watermark (8a, 8b, 50, 60, 110a-110d, 210a, 210b) borne by the fibrous layer and superposed at least partially on the translucent region of the substructure, wherein the watermark or pseudo-watermark is configured to be observed in light transmitted through the structure, in the translucent region of the substructure, and only from the face of the structure situated to the side of the fibrous layer.

2. The document as claimed in claim 1, wherein the structure (1, 200) comprises an integrated microcircuit device (4); particularly a contactless or contact-based communication microcircuit device.

3. The document as claimed in claim 1 or 2, wherein the structure comprises two fibrous layers, and the substructure is linked between the fibrous layers, each of the two fibrous layers comprising a watermark or pseudo-watermark configured to be observed in light transmitted through the structure only from the face of the structure situated to the side of the fibrous layer that bears it.

4. The document as claimed in claim 3, wherein said watermarks are partially superposed on the translucent layer, and wherein the watermark of a fibrous layer comprises:
a portion which is combined visually with a portion of the watermark or pseudo-watermark of the other fibrous layer outside of the translucent region of the substructure, and
another portion which is combined visually with no portion of the watermark or pseudo-watermark of the other fibrous layer in the translucent region of the substructure.

5. The document as claimed in claim 3, wherein said watermarks are partially superposed on the translucent layer, and wherein a respective watermark or pseudo-watermark of each fibrous layer is visible at least partially only on the face of the fibrous layer comprising the respective watermark, particularly in register with the translucent region of the substructure, and is visible at least partially on the face of the fibrous layer that does not comprise the respective watermark.

6. The document as claimed in any preceding claim, wherein the substructure is translucent and diffuses light.

7. The document as claimed in any preceding claim, wherein the substructure comprises at least one polymer layer, particularly chosen from polyethylenes (PE), polyvinylchlorides (PVC), polyethyleneterephthalates (PET), polycarbonates (PC), polyestercarbonates (PEC), polyethyleneterephthalate glycols (PETG), and acrylonitrilebutadiene styrenes (ABS), in particular comprising a film or an extruded layer.

8. The document as claimed in any preceding claim, wherein the support (101) of the document comprises an integrated microcircuit device and the substructure comprises an electromagnetic disturbance element configured to attenuate, disturb, or block an electromagnetic coupling between the integrated microcircuit device, in particular contact-less, and an external reader of a magnetic material, conductive material or resonator circuit type.

9. The document as claimed in any preceding claim, wherein the substructure is linked to the support and/or the fibrous layer(s) only at the fold line.

10. A method for fabricating a section document (100) as claimed in any preceding claim, **characterized in that** the method comprises the following steps :
forming at least one watermark or pseudo-watermark (8a, 8b, 50, 60, 110a-110d, 210a-210b) on a fibrous layer (2a, 2b, 103a, 103b, 104a, 104b) of an internal leaf (103, 104) of the sectional document; and
at least partially superposing a substructure (3, 120, 210) including a translucent region on said at least one watermark or pseudo-watermark borne by said fibrous layer in said translucent region,
especially assembling together the substructure and the fibrous layer.

11. The method as claimed in claim 10, further comprising folding and linking the internal leaf to the support of the sectional document at the fold line.

12. The method as claimed in claim 11, wherein the internal leaf defines two internal pages (103a, 103b, 104a, 104b) on either side of the fold line (102) of the sectional document, each internal page defining a fibrous layer bearing at least one watermark or pseudo-watermark,
wherein folding the internal leaf at the fold line at least partially superposes the watermarks or pseudo-watermarks.

13. The method as claimed in claim 10, wherein the sectional document comprises at least two distinct internal leaves (103, 104), each internal leaf defining a fibrous layer bearing at least one watermark or pseudo-watermark, the two watermarks or pseudo-watermarks being situated on one and the same side of the fold line (102) so that they are at least partially superposed.

14. The method as claimed in claim 13, wherein the sectional document comprises a first internal leaf (103) and a second internal leaf (104), each internal leaf defining two internal pages (103a, 103b, 104a, 104b) on either side of the fold line (102) and each internal page defining a fibrous layer including at least one watermark or pseudo-watermark, so that the watermarks or pseudo-watermarks of the first and second internal layers situated on one and the same side of the fold line (102) are at least partially superposed.

15. The method as claimed in any claim 10 to 14, further comprising linking the substructure to the support of the sectional document at the fold line, in particular by gluing, sealing or sewing.
